(19)

Europäisches
Patentamt
European
Patent Office
Office européen
des brevets

(11) **EP 4 317 274 A1**

(12) **EUROPEAN PATENT APPLICATION**
published in accordance with Art. 153(4) EPC

(43) Date of publication:
**07.02.2024 Bulletin 2024/06**

(21) Application number: **22775817.4**

(22) Date of filing: **25.03.2022**

(51) International Patent Classification (IPC):
***C08J 9/16*** *(2006.01)*

(52) Cooperative Patent Classification (CPC):
**C08J 9/16**

(86) International application number:
**PCT/JP2022/014285**

(87) International publication number:
**WO 2022/203036 (29.09.2022 Gazette 2022/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.03.2021 JP 2021052150**

(71) Applicant: **Kaneka Corporation
Osaka-shi, Osaka 530-8288 (JP)**

(72) Inventors:
• **AMANO, Masaki
Settsu-shi, Osaka 566-0072 (JP)**
• **NAKAYAMA, Kiyotaka
Settsu-shi, Osaka 566-0072 (JP)**

(74) Representative: **Vossius & Partner
Patentanwälte Rechtsanwälte mbB
Siebertstrasse 3
81675 München (DE)**

(54) **POLYPROPYLENE RESIN EXTRUDED FOAM PARTICLES, METHOD FOR PRODUCING SAME, AND FOAM MOLDED BODY**

(57)     Provided is: polypropylene-based resin extruded expanded particles capable of providing a polypropylene-based resin foamed molded product which has excellent low pressure moldability and excellent compressive strength; and the like.

The polypropylene-based resin extruded expanded particles contain a base resin in which a ratio between a low melting point polypropylene-based resin and a high melting point polypropylene-based resin is within a specific range.

**EP 4 317 274 A1**

## Description

Technical Field

The present invention relates to polypropylene-based resin extruded expanded particles, a method for producing the polypropylene-based resin extruded expanded particles, and a foamed molded product.

Background Art

A polypropylene-based resin foamed molded product obtained with use of polypropylene-based resin expanded particles has the characteristics of being excellent in, for example, the property of being formed in any shape, shock-absorbing properties, lightweight properties, and heat insulating properties. These characteristics are advantages of a polypropylene-based resin foamed molded product. Further, a polypropylene-based resin foamed molded product, the base material of which is a polypropylene-based resin, is excellent in chemical resistance, heat resistance, compressive strength, and strain recovery rate after compression. Because of having these advantages, a polypropylene-based resin foamed molded product has various uses such as heat insulating materials and shock-absorbing packing materials, in addition to automobile interior materials and automobile bumper core materials that are main uses thereof.

Polypropylene-based resin expanded particles can be produced typically by the method referred to as a "pressure-release expansion method", which is a method of dispersing, in water, polypropylene-based resin particles along with a volatile blowing agent inside a pressure-resistant vessel. In order to obtain polypropylene-based resin particles to be used in the pressure-release expansion method, it is necessary to use an extruder or the like to form, in advance of the use in the pressure-release expansion method, a polypropylene-based resin into pellets of a size suitable for expansion. This therefore means that in a case of using a polypropylene-based resin as a raw material to obtain polypropylene-based resin expanded particles by a pressure-release expansion method, two steps which are a pellet formation step and a pressure-release expansion step are required. As a result, there can be the following problems with the pressure-release expansion method: (a) the equipment investment tends to increase and (b) the use of a dispersion medium such as water requires an effluent treatment facility.

For the purpose of overcoming these problems, it has been proposed in recent years to obtain polypropylene-based resin extruded expanded particles by an extrusion foaming method (e.g., Patent Literatures 1 to 3).

There is also a demand for polypropylene-based resin expanded particles to have the capability (low pressure moldability) of being molded with steam having a lower pressure, from an economic viewpoint. The low pressure moldability can be achieved, for example, by a technique of selecting a low melting point resin as a base resin included in the polypropylene-based resin expanded particles (e.g., Patent Literature 4).

Citation List

[Patent Literature]

[Patent Literature 1]
Japanese Patent Application Publication, Tokukaihei, No. 9-302131
[Patent Literature 2]
Japanese Patent Application Publication, Tokukai, No. 2009-256460
[Patent Literature 3]
International Publication No. 2018/016399
[Patent Literature 4]
Japanese Patent Application Publication, Tokukai, No. 2009-144096

Summary of Invention

Technical Problem

However, with conventional polypropylene-based resin extruded expanded particles, it was not possible to fully achieve both of: low pressure moldability of the polypropylene-based resin extruded expanded particles; and high compressive strength of a foamed molded product obtained from the polypropylene-based resin extruded expanded particles.

An embodiment of the present invention has been made in view of the above problem, and an object thereof is to provide polypropylene-based resin extruded expanded particles that have excellent low pressure moldability and are capable of providing a polypropylene-based resin foamed molded product having excellent compressive strength.

Solution to Problem

Specifically, polypropylene-based resin extruded expanded particles in accordance with an embodiment of the present invention contain a base resin containing (i) more than 70% by weight and not more than 98% by weight of a polypropylene-based resin (A) having a branched structure and a melting point $Tm_{2A}$ of not lower than 130.0°C and lower than 143.0°C and (ii) not less than 2% by weight and less than 30% by weight of a polypropylene-based resin (B) having a branched structure and a melting point Time of not lower than 150.0°C and lower than 170.0°C, a total amount of the polypropylene-based resin (A) and the polypropylene-based resin (B) being 100% by weight, wherein a melting point $Tm_1$ of the polypropylene-based resin extruded expanded particles in a first temperature increase is not lower than 130.0°C and lower than 155.0°C.

Advantageous Effects of Invention

An embodiment of the present invention advantageously provides polypropylene-based resin extruded expanded particles that have excellent low pressure moldability and are capable of providing a polypropylene-based resin foamed molded product having excellent compressive strength.

Description of Embodiments

The following description will discuss an embodiment of the present invention. However, the present invention is not limited to the embodiment below. The present invention is not limited to the configurations described below, but may be altered in various ways within the scope of the claims by a person skilled in the art. The present invention also encompasses, in its technical scope, any embodiment or example derived by combining technical means disclosed in differing embodiments or examples. Further, a new technical feature can be formed by combining the technical means disclosed in differing embodiments. All of the academic documents and patent literatures listed herein are incorporated by reference herein. The expression "A to B", representing a numerical range, herein means "not less than A (inclusive of A and greater than A) and not more than B (inclusive of B and smaller than B)" unless otherwise specified herein.

[1. Technical idea of embodiment of present invention]

In a case where, as in the case of polypropylene-based resin extruded expanded particles obtained by the pressure-release expansion method, a low melting point resin is selected as a base resin included in polypropylene-based resin extruded expanded particles, a molded product obtained by molding the polypropylene-based resin extruded expanded particles tends to have a low compressive strength.

Meanwhile, in a case where a high melting point resin which is excellent in strength is blended in a base resin included in polypropylene-based resin extruded expanded particles, the base resin has a melting point closer to the melting point (high melting point) of the resin, so that the polypropylene-based resin extruded expanded particles tend to have a poor low pressure moldability.

Through diligent studies, however, the inventors of the present invention made a finding below. Namely, the following (i) and (ii) are not necessarily in a simple correlation with each other.

(i) A melting point $Tm_1$ of polypropylene-based resin extrusion expanded particles in a first temperature increase.
(ii) A ratio (blending ratio) of "an amount of a polypropylene-based resin (B) blended" to "an amount of a polypropylene-based resin (A) blended", wherein a melting point $Tm_{2B}$ of the polypropylene-based resin (B) in a second temperature increase is high and a melting point $Tm_{2A}$ of the polypropylene-based resin (A) in a second temperature increase is low.

This is considered to be because a balance between the low pressure moldability of the extruded expanded particles and the compressive strength of the foamed molded product is achieved on the basis of a complex relationship between the polypropylene-based resin (A) and the polypropylene-based resin (B).

An embodiment of the present invention has been made on the basis of this new finding. The following description will discuss an embodiment of the present invention in detail.

[2. Polypropylene-based resin extruded expanded particles]

Polypropylene-based resin extruded expanded particles in accordance with an embodiment of the present invention are polypropylene-based resin extruded expanded particles that contain a base resin containing (i) more than 70% by weight and not more than 98% by weight of a polypropylene-based resin (A) having a branched structure and a melting point $Tm_{2A}$ of not lower than 130.0°C and lower than 143.0°C and (ii) not less than 2% by weight and less than 30% by weight of a polypropylene-based resin (B) having a branched structure and a melting point $Tm_{2B}$ of not lower than 150.0°C and lower than 170.0°C, a total amount of the polypropylene-based resin (A) and the polypropylene-based resin (B) being 100% by weight, wherein a melting point $Tm_1$ of the polypropylene-based resin extruded expanded particles in a first temperature increase is not lower than 130.0°C and lower than 155.0°C.

By in-mold foam molding of the polypropylene-based resin extruded expanded particles in accordance with an embodiment of the present invention, it is possible to make a polypropylene-based resin foamed molded product. In the present specification, the "polypropylene-based resin having a branched structure" can be referred to as a "branched polypropylene-based resin", and the "polypropylene-based resin extruded expanded particles" can be referred to as "extruded expanded particles". In the present specification, the "polypropylene-based resin extruded expanded particles in accordance with an embodiment of the present invention" can be referred to as the "present extruded expanded particles", and the "polypropylene-based resin foamed molded product" can be referred to as a "foamed molded product". Further, in the present specification, the "polypropylene-based resin foamed molded product in accordance with an embodiment of the present invention" can be referred to as the "present foamed molded product".

The present extruded expanded particles, which have the above configurations, have excellent low pressure moldability. Further, the present extruded expanded particles, which have the above configurations, have the advantage of being capable of providing a foamed molded product having excellent compressive strength.

(1-1. Base resin)

The base resin preferably contains only branched polypropylene-based resins (for example, branched polypropylene-based resins (A) and (B)). The base resin can also contain polypropylene-based resins each having a branched structure (e.g., the polypropylene-based resins (A) and (B)) and further contain an optional additive such as a cell nucleating agent. It can be said that the base resin is a resin component which substantially constitutes the extruded expanded particles.

As described above, relative to 100% by weight of a total of the branched polypropylene-based resin (A) and the branched polypropylene-based resin (B), the base resin (i) contains more than 70% by weight and not more than 98% by weight of the branched polypropylene-based resin (A) and not less than 2% by weight and less than 30% by weight of the branched polypropylene-based resin (B), (ii) preferably contains more than 75% by weight and not more than 98% by weight of the branched polypropylene-based resin (A) and not less than 2% by weight and less than 25% by weight of the branched polypropylene-based resin (B), (iii) more preferably contains more than 80% by weight and not more than 98% by weight of the branched polypropylene-based resin (A) and not less than 2% by weight and less than 20% by weight of the branched polypropylene-based resin (B), and (iv) even more preferably contains not less than 85% by weight and not more than 95% by weight of the branched polypropylene-based resin (A) and not less than 5% by weight and not more than 15% by weight of the branched polypropylene-based resin (B). This configuration makes it possible to enhance low pressure moldability of the extruded expanded particles.

In the present specification, "branched polypropylene-based resin" is intended to mean (a) a polypropylene-based resin in which molecules of a polypropylene-based resin in which a branched structure is not introduced are partially intermolecularly crosslinked with each other and (b) a polypropylene-based resin which has no branched structure introduced therein and which has introduced as a branched chain therein a diene compound or the like that is other than (poly)propylene. In the present specification, "polypropylene-based resin having no branched structure introduced therein" may be referred to as "linear polypropylene-based resin", and "linear polypropylene-based resin" and "branched polypropylene-based resin" may be collectively referred to as "polypropylene-based resin". It can be said that a linear polypropylene-based resin is a raw material of a branched polypropylene-based resin.

In the present specification, polypropylene-based resin is intended to mean a resin that contains a structural unit derived from a propylene monomer, in a proportion of not less than 50 mol% per 100 mol% of all structural units contained in the resin. In the present specification, the "structural unit derived from a propylene monomer" may also be referred to as a "propylene unit".

(Linear polypropylene-based resin)

A linear polypropylene-based resin may be (a) a homopolymer of propylene, (b) a block copolymer or a random copolymer that is a copolymer of propylene and a monomer other than propylene, or (c) a mixture of at least two thereof.

A linear polypropylene-based resin may include, in addition to a propylene unit, a structural unit derived from a monomer other than a propylene monomer in such a manner as to include such a structural unit in a quantity of one or more units or as to include one or more types of such structural units. A "monomer other than a propylene monomer" used in producing a linear polypropylene-based resin may also be referred to as a "comonomer". A "structural unit derived from a monomer other than a propylene monomer" included in a linear polypropylene-based resin may also be referred to as a "comonomer unit".

Examples of such a comonomer encompass: (a) $\alpha$-olefins having 2 or 4 to 12 carbon atoms, such as ethylene, 1-butene, isobutene, 1-pentene, 3-methyl-1-butene, 1-hexene, 4-methyl-1-pentene, 3,4-dimethyl-1-butene, 1-heptene, 3-methyl-1-hexene, 1-octene, and 1-decene; (b) cyclic olefins such as cyclopentene, norbornene, and tetracyclo[6,2,11,8,13,6]-4-dodecene; (c) dienes such as 5-methylene-2-norbornene, 5-ethylidene-2-norbornene, 1,4-hexadiene, methyl-1,4-hexadiene, and 7-methyl-1,6-octadiene; and (d) vinyl-based monomers such as vinyl chloride, vinylidene chloride, acrylonitrile, methacrylonitrile, vinyl acetate, acrylic acid, acrylic esters, methacrylic acid, methacrylic esters, maleic acid, maleic anhydride, styrene-based monomers, vinyltoluene, and divinylbenzene.

Examples of the acrylic esters encompass methyl acrylate, ethyl acrylate, butyl acrylate, hexyl acrylate, 2-ethylhexyl acrylate, lauryl acrylate, stearyl acrylate, 2-hydroxyethyl acrylate, 2-hydroxypropyl acrylate, and glycidyl acrylate.

Examples of the methacrylic esters encompass methyl methacrylate, ethyl methacrylate, butyl methacrylate, hexyl methacrylate, 2-ethylhexyl methacrylate, lauryl methacrylate, stearyl methacrylate, 2-hydroxyethyl methacrylate, 2-hydroxypropyl methacrylate, and glycidyl methacrylate.

Examples of the styrene-based monomers encompass styrene, methylstyrene, dimethylstyrene, alpha methylstyrene, paramethylstyrene, ethylstyrene, diethylstyrene, isopropylstyrene, t-butylstyrene, bromostyrene, dibromostyrene, tribromostyrene, chlorostyrene, dichlorostyrene, and trichlorostyrene.

A linear polypropylene-based resin has, as a comonomer unit(s), preferably a structural unit(s) derived from $\alpha$-olefin having 2 or 4 to 12 carbon atoms, more preferably a structural unit(s) derived from ethylene, 1-butene, isobutene, 1-pentene, 3-methyl-1-butene, 1-hexene, 4-methyl-1-pentene, 3,4-dimethyl-1-butene, 1-heptene, 3-methyl-1-hexene, 1-octene, and/or 1-decene, more preferably a structural unit(s) derived from ethylene, 1-butene, isobutene, 1-pentene, 3-methyl-1-butene, 1-hexene, and/or 4-methyl-1-pentene, even more preferably a structural unit(s) derived from ethylene, 1-butene, isobutene, and/or 1-pentene, and particularly preferably a structural unit(s) derived from ethylene and/or 1-butene. This configuration offers the following advantages: (a) a branched polypropylene-based resin having a high melt tension and a low gel fraction is obtained; and (b) the obtained branched polypropylene-based resin is capable of providing polypropylene-based resin extruded expanded particles having excellent moldability.

A linear polypropylene-based resin is preferably a propylene-based homopolymer, a polypropylene-based block copolymer, and/or a polypropylene-based random copolymer, and more preferably a propylene homopolymer and/or a polypropylene-based random copolymer. This configuration offers the following advantages: (a) a branched polypropylene-based resin having a high melt tension and a low gel fraction is obtained; and (b) the obtained branched polypropylene-based resin is capable of providing polypropylene-based resin extruded expanded particles having excellent moldability.

A linear polypropylene-based resin includes a propylene unit in an amount which is preferably not less than 90 mol%, more preferably not less than 93 mol%, even more preferably not less than 94 mol%, and particularly preferably not less than 95 mol%, relative to 100 mol% of all structural units included in the linear polypropylene-based resin. This configuration offers the advantage that a branched polypropylene-based resin having a high melt tension and a low gel fraction is obtained.

A linear polypropylene-based resin used in preparation of a branched polypropylene-based resin (A) is referred to as a linear polypropylene-based resin (A'). Examples of a linear polypropylene-based resin (A') encompass (i) a linear polypropylene-based resin having a melting point $Tm_{3A}$ of not lower than 130.0°C and lower than 150.0°C, (ii) preferably a linear polypropylene-based resin having a melting point $Tm_{3A}$ of not lower than 132.0°C and not higher than 147.0°C, and (iii) more preferably a linear polypropylene-based resin having a melting point $Tm_{3A}$ of not lower than 135.0°C and not higher than 145.0°C. Such a linear polypropylene-based resin (A') offers the advantage that a desired branched polypropylene-based resin (A) can be efficiently prepared.

A linear polypropylene-based resin used in preparation of the branched polypropylene-based resin (B) is referred to as a linear polypropylene-based resin (B'). Examples of a linear polypropylene-based resin (B') encompass (i) a linear polypropylene-based resin having a melting point $Tm_{3B}$ of not lower than 150.0°C and lower than 170.0°C, (ii) preferably a linear polypropylene-based resin having a melting point $Tm_{3B}$ of not lower than 155.0°C and not higher than 168.0°C, and (iii) more preferably a linear polypropylene-based resin having a melting point $Tm_{3B}$ of not lower than 160.0°C and not higher than 165.0°C. Such a linear polypropylene-based resin (B') offers the advantage that a desired branched polypropylene-based resin (B) can be efficiently prepared.

Note here that the melting point $Tm_{3A}$ of the linear polypropylene-based resin (A) and the melting point $Tm_{3B}$ of the linear polypropylene-based resin (B) (in other words, the melting points $Tm_{3A}$ and $Tm_{3B}$ in a second temperature increase) are values each determined by measurement in differential scanning calorimetry (hereinafter referred to as "DSC method"). The specific operational procedure is as follows: (1) the temperature of 5 mg to 6 mg of a linear polypropylene-based resin is increased from 40°C to 220°C at a temperature increase rate of 10°C/min so that the linear polypropylene-based resin is melted; (2) thereafter, the temperature of the melted linear polypropylene-based resin is decreased from 220°C to 40°C at a temperature decrease rate of 10°C/min so that the linear polypropylene-based resin is crystallized; and (3) then, the temperature of the crystallized linear polypropylene-based resin is increased from 40°C to 220°C at a temperature increase rate of 10°C/min. A temperature corresponding to a peak (melting peak) of a DSC curve, obtained in the second temperature increase (i.e., in (3)), of the linear polypropylene-based resin can be determined as being the melting point $Tm_3$ of the linear polypropylene-based resin. Note that, in a case where as a result of carrying out the above-described method, there is more than one peak (melting peak) in the DSC curve, obtained in the second temperature increase, of the linear polypropylene-based resin, a temperature corresponding to a peak (melting peak) at which the melting heat quantity is the greatest is defined as the melting point $Tm_3$ of the linear polypropylene-based resin. As a differential scanning calorimeter, it is possible to use, for example, a differential scanning calorimeter of a DSC6200 type available from Seiko Instruments Inc.

A linear polypropylene-based resin has an MFR which is not particularly limited. However, the MFR of a linear polypropylene-based resin can affect the MFR of the base resin. As such, the MFR of a linear polypropylene-based resin is, for example, preferably 0.5 g/10 min to 22.0 g/10 min, more preferably 1.0 g/10 min to 20.0 g/10 min, more preferably 2.0 g/10 min to 15.0 g/10 min, even more preferably 2.0 g/10 min to 12.0 g/10 min, still even more preferably 2.0 g/10 min to 10.0 g/10 min, and particularly preferably 3.0 g/ 10 min to 9.0 g/10 min. The MFR of a linear polypropylene-based resin being within the above-described range offers the advantage that the obtained extruded expanded particles have excellent low pressure moldability and are capable of providing a foamed molded product having high compressive strength. (a) The MFR of a linear polypropylene-based resin being not less than 0.5 g/10 min offers the advantage that the obtained branched polypropylene-based resin is capable of providing a foamed molded product which is less deformed and has good surface properties (beautiful surface), and (b) the MFR of a linear polypropylene-based resin being not more than 22.0 g/10 min offers the advantage that, at the time of extrusion expansion, the composition has good expandability.

In the present specification, the MFR of a linear polypropylene-based resin is a value determined by measurement carried out under conditions that are a temperature of 230°C and a load of 2.16 kg, in accordance with ISO1133.

(Branched polypropylene-based resin)

A branched polypropylene-based resin (e.g., branched polypropylene-based resins (A) and (B)) can be obtained by introducing a branched structure into a linear polypropylene-based resin. For example, a branched polypropylene-based resin (A) can be obtained by introducing a branched structure into linear polypropylene (A'), and a branched polypropylene-based resin (B) can be obtained by introducing a branched structure into linear polypropylene (B'). For example, a branched polypropylene-based resin that contains polypropylene-based resins (A) and (B) (in other words, a branched polypropylene-based resin that contains, within a single molecule (single polymer), a polypropylene-based resin (A) and a polypropylene-based resin (B) that are in a state of being crosslinked with each other) can be obtained by introducing a branched structure into a mixture of linear polypropylene (A') and linear polypropylene (B').

In other words, a branched structure can be introduced into linear polypropylene (A') and linear polypropylene (B') independently, or a branched structure can be introduced into a mixture of linear polypropylene (A') and linear polypropylene (B').

A method for introducing a branched structure into a linear polypropylene-based resin is not particularly limited, but examples of the method encompass (a1) a method of subjecting a linear polypropylene-based resin to irradiation and (a2) a method of melting and kneading a mixture that contains: a linear polypropylene-based resin; at least one type of monomer selected from the group consisting of a conjugated diene and a vinyl aromatic compound; and a radical polymerization initiator.

Specific examples of the method (a1) encompass a method disclosed in Published Japanese Translation of PCT International Application, Tokuhyo, No. 2002-542360.

Specific examples of the method (a2) encompass a method that includes a preparation step (described later).

In an embodiment of the present invention, a branched polypropylene-based resin is preferably obtained by the method (a2) because: (i) the method (a2) makes it possible to stably introduce a branched structure into a linear polypropylene-based resin, and the reproducibility of introduction of a branched structure is high; and/or (ii) the method (a2) makes it possible to obtain a branched polypropylene-based resin with high productivity without the need for complicated equipment.

Examples of a polypropylene-based resin (A) having a branched structure encompass (i) a polypropylene-based resin having a branched structure and a melting point $Tm_{2A}$ of not lower than 130.0°C and lower than 143.0°C, (ii) preferably a polypropylene-based resin having a branched structure and a melting point $Tm_{2A}$ of not lower than 133.0°C and not higher than 142.0°C, and (iii) more preferably a polypropylene-based resin having a branched structure and a melting point $Tm_{2A}$ of not lower than 135.0°C and not higher than 141.0°C. Extruded expanded particles obtained with use of such a polypropylene-based resin (A) offer the advantage that the extruded expanded particles have excellent low pressure moldability and are capable of providing a foamed molded product having excellent compressive strength.

Examples of a polypropylene-based resin (B) having a branched structure encompass (i) a polypropylene-based resin having a branched structure and a melting point $Tm_{2B}$ of not lower than 150°C and lower than 170°C, (ii) preferably a polypropylene-based resin having a branched structure and a melting point $Tm_{2B}$ of not lower than 153.0°C and not higher than 167.0°C, and (iii) more preferably a polypropylene-based resin having a branched structure and a melting point $Tm_{2B}$ of not lower than 155.0°C and not higher than 165.0°C. Extruded expanded particles obtained with use of such a polypropylene-based resin (B) offer the advantage that the extruded expanded particles have excellent low pressure moldability and are capable of providing a polypropylene-based resin foamed molded product having excellent compressive strength.

In an embodiment of the present invention, the base resin can be (i) a base resin that contains a polypropylene-based resin (A) and a polypropylene-based resin (B) in the form of respective molecules independent of each other (in other words, a base resin that contains a mixture of polypropylene-based resins (A) and (B)), or (ii) a base resin that contains a branched polypropylene-based resin containing, within a single molecule (a single polymer), polypropylene-based resins (A) and (B) which are in a state of being crosslinked with each other. According to an embodiment of the present invention, both of these aspects can provide extruded expanded particles that have excellent low pressure moldability and are capable of providing a polypropylene-based resin foamed molded product having excellent compressive strength.

Note here that the melting point $Tm_{2A}$ of a branched polypropylene-based resin (A) and the melting point $Tm_{2B}$ of a branched polypropylene-based resin (B) (in other words, the melting points $Tm_{2A}$ and $Tm_{2B}$ in the second temperature increase) are values each determined by measurement in differential scanning calorimetry (also referred to as "DSC method"). The specific operational procedure is as follows: (1) the temperature of 5 mg to 6 mg of a polypropylene-based resin (A) or (B) is increased from 40°C to 220°C at a temperature increase rate of 10°C/min so that the polypropylene-based resin (A) or (B) is melted; (2) thereafter, the temperature of the melted polypropylene-based resin (A) or (B) is decreased from 220°C to 40°C at a temperature decrease rate of 10°C/min so that the polypropylene-based resin (A) or (B) is crystallized; and (3) then, the temperature of the crystallized polypropylene-based resin (A) or (B) is increased from 40°C to 220°C at a temperature increase rate of 10°C/min. A temperature corresponding to a peak (melting peak) of a DSC curve, obtained in the second temperature increase (i.e., in (3)), of the polypropylene-based resin (A) or (B) can be determined as being the melting point $Tm_2$ of the polypropylene-based resin (A) or (B). Note that, in a case where as a result of carrying out the above-described method, there is more than one peak (melting peak) in the DSC curve obtained in the second temperature increase, a temperature corresponding to a peak (melting peak) at which the melting heat quantity is the greatest is defined as the melting point $Tm_2$ of the polypropylene-based resin (A) or (B). As a differential scanning calorimeter, it is possible to use, for example, a differential scanning calorimeter of a DSC6200 type available from Seiko Instruments Inc.

The following will describe a branched polypropylene-based resin (hereinafter referred to as "branched polypropylene-based resin (X)") obtained by introduction of branched structures into a mixture of a plurality of types of linear polypropylene-based resins (for example, a mixture of a linear polypropylene-based resin (A') and a linear polypropylene-based resin (B')). As described above, a branched polypropylene-based resin (X) includes branched polypropylene-based resins (e.g., a branched polypropylene-based resin (A) and a branched polypropylene-based resin (B) obtained by introduction of a branched structure into a linear polypropylene-based resin (A') and a linear polypropylene-based resin (B'), respectively) that are obtained by introduction of a branched structure into respective ones of a plurality of types of linear polypropylene-based resins used as raw materials. Further, a branched polypropylene-based resin (X) may contain part of a component obtained by crosslinking between a linear polypropylene-based resin (A') and a linear polypropylene-based resin (B').

In an embodiment of the present invention, a branched polypropylene-based resin (A) and a branched polypropylene-based resin (B) contained in the base resin to be used are respective components obtained by a method below. Note that a component obtained by crosslinking between a linear polypropylene-based resin (A') and a linear polypropylene-based resin (B') is to be contained in (A) or (B) below, depending on the melting point of the component.

(1) The base resin is separated according to melting point, in accordance with a method described in Example 1 of Japanese Patent Application Publication, Tokukai, No. 2014-055924, so that an elution chromatogram is obtained.
(2) A component corresponding to the highest peak in the obtained elution chromatogram is defined as a branched polypropylene-based resin (A), and a component corresponding to the second highest peak in the elution chromatogram is defined as a branched polypropylene-based resin (B).

The respective melting points $Tm_{2A}$ and $Tm_{2b}$ of the branched polypropylene-based resin (A) and the branched polypropylene-based resin (B) thus obtained are values determined by DSC measurement carried out by the above method with respect to the branched polypropylene-based resin (A) and the branched polypropylene-based resin (B) separated and collected by the above method.

Further, a ratio between the respective amounts of the branched polypropylene-based resin (A) and the branched polypropylene-based resin (B) contained in the branched polypropylene-based resin (X) is determined as a peak area ratio in the elution chromatogram.

Note that, in a branched polypropylene-based resin obtained with use of a linear polypropylene-based resin as a raw material, the structure of a portion (i.e., a main chain) other than a crosslinked part is derived from the structure of the linear polypropylene-based resin. For example, the main chain of a branched polypropylene-based resin (A), the main chain of a branched polypropylene-based resin (B), and/or the main chains of branched polypropylene-based resins (A) and (B) (i.e., a branched polypropylene-based resin (X)) are/is preferably a propylene homopolymer, a polypropylene-based block copolymer, and/or a polypropylene-based random copolymer, and are/is more preferably a propylene homopolymer and/or a polypropylene-based random copolymer. This configuration offers the following advantages: (a) the branched polypropylene-based resin has a high melt tension and a low gel fraction; and (b) the branched polypropylene-based resin is capable of providing polypropylene-based resin extruded expanded particles having excellent moldability.

(Another resin or rubber)

The base resin may further contain: a resin (hereinafter also referred to as "another resin") which is other than a branched polypropylene-based resin; or rubber, to the extent that the effect of an embodiment of the present invention is not impaired. Examples of the another resin, which is other than a branched polypropylene-based resin, encompass (a) a linear polypropylene-based resin such as an ethylene/propylene random copolymer, an ethylene/propylene block copolymer, or a propylene homopolymer, (b) an ethylene-based resin such as high-density polyethylene, medium-density polyethylene, low-density polyethylene, linear low-density polyethylene, linear very-low-density polyethylene, an ethylene/vinyl acetate copolymer, an ethylene/acrylic acid copolymer, or an ethylene/methacrylic acid copolymer and (c) a styrene-based resin such as polystyrene, a styrene/maleic anhydride copolymer, or a styrene/ethylene copolymer. Examples of the rubber encompass olefin-based rubber such as ethylene/propylene rubber, ethylene/butene rubber, ethylene/hexene rubber, and ethylene/octene rubber. A total amount of the another resin and the rubber contained in the base resin is not particularly limited. For example, the total amount of the another resin and the rubber contained in the base resin is preferably 1 part by weight to 10 parts by weight, and more preferably 2 parts by weight to 5 parts by weight, relative to 100 parts by weight of the branched polypropylene-based resins.

(Cell nucleating agent)

The base resin may include a cell nucleating agent. In other words, a cell nucleating agent may be used in producing the present extruded expanded particles. By using a cell nucleating agent, it is possible to control the number and shape of cells of the obtained polypropylene-based resin extruded expanded particles.

Examples of the cell nucleating agent encompass a sodium bicarbonate-citric acid mixture, monosodium citrate, talc, and calcium carbonate. One of these cell nucleating agents may be used solely, or at least two of these cell nucleating agents may be used in combination.

The amount of the cell nucleating agent contained in the base resin, which is, in other words, the amount of the cell nucleating agent used in producing the extruded expanded particles, is not particularly limited. For example, the amount of the cell nucleating agent contained is preferably 0.01 parts by weight to 5.00 parts by weight, more preferably 0.01 parts by weight to 3.50 parts by weight, even more preferably 0.01 parts by weight to 1.00 parts by weight, and particularly preferably 0.01 parts by weight to 0.50 parts by weight, relative to 100 parts by weight of the polypropylene-based resin. This configuration offers the advantage that the extruded expanded particles tend to have a uniform average cell diameter and a uniform cell shape, and consequently expandability during extrusion expansion tends to be easily stabilized.

(Other component(s))

As necessary, the base resin may further contain, as other component(s), (a) a stabilizer(s) such as an antioxidant, a metal deactivator, a phosphorous processing stabilizer, an ultraviolet absorber, an ultraviolet stabilizer, a fluorescent brightening agent, metallic soap, and/or an antacid adsorbent and/or (b) an additive(s) such as a crosslinking agent, a chain transfer agent, a lubricant, a plasticizer, a filler, a reinforcer, a flame retardant, a coloring agent, and/or an antistatic agent. One of these other components may be used solely, or at least two of these other components may be used in combination. A total amount of the other component(s) contained in the base resin is not particularly limited. The total amount of the other component(s) contained in the base resin is, for example, preferably 0.01 parts by weight to 50.00 parts by weight, and more preferably 0.05 parts by weight to 30.00 parts by weight, relative to 100 parts by weight of the branched polypropylene-based resin.

(Physical properties of base resin)

The following description will discuss the physical properties of the base resin. Note that the base resin included in the extruded expanded particles or the base resin included in the foamed molded product obtained from the extruded expanded particles, i.e., the base resin that substantially constitutes the extruded expanded particles or the foamed molded product has physical properties which undergo substantially no change through the operation of melting the extruded expanded particles or the foamed molded product under reduced pressure to cause the base resin to revert to a lump of resin. Therefore, the physical properties of the lump of resin obtained by melting, under reduced pressure, the extruded expanded particles or the foamed molded product obtained from the extruded expanded particles can be considered to be the physical properties of the base resin included in the extruded expanded particles or the foamed molded product. In the present specification, obtaining a lump of resin by melting, under reduced pressure, the extruded expanded particles or a foamed molded product obtained from the extruded expanded particles can be referred to as "reversion-to-resin". The lump of resin obtained by the reversion-to-resin may be referred to as "reversion resin".
The specific method for the reversion-to-resin is not particularly limited, but examples thereof encompass a method in which the following steps (a1) through (a5) are carried out in sequence: (a1) the extruded expanded particles or the foamed molded product are put in a dryer having a temperature adjusted to 180°C; (a2) subsequently, the pressure inside the dryer is reduced to a pressure in a range of -0.05 MPa (gage pressure) to -0.10 MPa (gage pressure) over 5 to 10 minutes with use of a vacuum pump; (a3) thereafter, the extruded expanded particles are left to stand in the dryer for 30 minutes for preparation of a lump of resin (reversion resin); (a4) subsequently, the temperature in the dryer is reduced to room temperature, and the pressure in the dryer is then returned to normal pressure; and (a5) thereafter, the lump of resin is taken out of the dryer.

(Melt elongation)

The base resin has a melt elongation which is 3.0 m/min to 30.0 m/min, preferably 4.0 m/min to 25.0 m/min, more preferably 5.0 m/min to 20.0 m/min, even more preferably 6.0 m/min to 18.0 m/min, and particularly preferably 7.0 m/min to 16.0 m/min. The melt elongation of the base resin can be 3.0 m/min to 8.0 m/min, 4.0 m/min to 8.0 m/min, 5.0 m/min to 8.0 m/min, 6.0 m/min to 8.0 m/min, or 7.0 m/min to 8.0 m/min. The melt elongation of the base resin being within the above-described range offers the advantage that the obtained extruded expanded particles have excellent low pressure moldability and are capable of providing a foamed molded product having excellent compressive strength.
The melt elongation of the base resin is a value determined by melt tension measurement at 230°C. The melt elongation of the base resin is a value determined by melt tension measurement at 230°C in which used as a sample is, for example, the reversion resin obtained by reversion-to-resin of the extruded expanded particles or the foamed molded product. Used as a device for use in the melt tension measurement is a Capilograph 1D (manufactured by TOYO SEIKI SEISAKU-SHO, LTD) which is equipped with an attachment for melt tension measurement, which is equipped, at a leading end thereof, with an orifice having a hole diameter ($\varphi$) of 1 mm and a length of 10 mm, and which includes a cylinder having a diameter ($\varphi$) of 10 mm. An example of a method of measuring the melt elongation of the base resin with use of the device is as follows: (1) the cylinder of the Capilograph is filled with the reversion resin obtained by the reversion-to-resin of the extruded expanded particles or the foamed molded product, the cylinder being set at 230°C and equipped, at a leading end thereof, with an orifice having a diameter of 1 mm and a length of 10 mm; (2) the reversion resin with which the cylinder is filled is left to stand in the cylinder for 5 minutes, and the reversion resin is heated (preheated); (3) thereafter, a piston is lowered at a piston lowering speed of 10 mm/min so that the reversion resin is discharged in the form of a strand through the orifice; (5) the reversion resin discharged in the form of a strand is pulled over a pulley which has a load cell and which is installed 350 mm below the orifice, and taking up of the reversion resin is started with a speed of 1 m/min; (6) after the taking up of the reversion resin becomes stable, the take-up speed of the reversion resin is increased at a constant rate such that the take-up speed is increased from 1 m/min over 4 minutes to reach 200 m/min; (7) the take-up speed is recorded at the moment at which the reversion resin in the form of a strand breaks; (8) the same operations are repeated 4 more times (5 times in total), and the arithmetic mean value of the take-up speeds for n=5 is determined as being the melt elongation.

(Melt flow rate (MFR))

The base resin has an MFR which is 1.0 g/10 min to 20.0 g/10 min, more preferably 2.0 g/ 10 min to 15.0 g/10 min, even more preferably 2.0 g/10 min to 10.0 g/10 min, still even more preferably 2.0 g/10 min to 8.0 g/10 min, and particularly preferably 2.0 g/10 min to 6.0 g/10 min. The MFR of the base resin can be 1.0 g/10 min to 4.4 g/ 10 min, 2.0 g/ 10 min to 4.4 g/10 min, 3.0 g/ 10 min to 4.4 g/10 min, or 4.0 g/10 min to 4.4 g/ 10 min. The MFR of the base resin being within the above-described range offers the advantage that the obtained extruded expanded particles have excellent low pressure moldability and are capable of providing a foamed molded product having excellent compressive strength.

The MFR of the base resin is a value determined by measurement carried out under conditions that are a temperature of 230°C and a load of 2.16 kg, in accordance with ISO1133. The MFR of the base resin is a value determined by, for example, measurement that is carried out under the following conditions: measurement that is carried out (i) with use of, as a sample, a resin obtained by melting (the reversion-to-resin of) extruded expanded particles or a foamed molded product, (ii) in compliance with the requirements of Procedure B described in ISO 1133 (1997); via Melt Indexer S-01 (manufactured by TOYO SEIKI SEISAKU-SHO, LTD), and (iii) under the conditions that are a temperature of 230°C and a load of 2.16 kg. The MFR of the base resin may be a value obtained by conversion into the weight of the sample discharged through an orifice per 10 minutes on the basis of: a distance obtained by measurement of the travel distance of the piston of the Melt Indexer S-01 during a certain period of time; and the density of the sample at the temperature of the measurement. Note that the certain period of time may be 120 seconds in a case where the melt flow rate is more than 0.1 g/10 min and not more than 1.0 g/10 min. The certain period of time may be 60 seconds in a case where the melt flow rate is more than 1.0 g/10 min and not more than 30.0 g/10 min, or 30 seconds in a case where the melt flow rate is more than 3.5 g/10 min and not more than 10 g/10 min.

(1-2. Polypropylene-based resin extruded expanded particles)

(Physical properties of extruded expanded particles)

The following description will discuss the physical properties of the extruded expanded particles. Note that a method for producing the polypropylene-based resin extruded expanded particles will be described in detail later.

(Melting point $Tm_1$ of polypropylene-based resin extrusion expanded particles in first temperature increase)

A melting point $Tm_1$ of the polypropylene-based resin extruded expanded particles in the first temperature increase is not lower than 130.0°C and lower than 155.0°C. From the viewpoint of reducing the minimum steam pressure of the foamed molded product, the melting point $Tm_1$ of the polypropylene-based resin extruded expanded particles in the first temperature increase is preferably not lower than 130.0°C and not higher than 150.0°C, and more preferably not lower than 130.0°C and not higher than 145.0°C. From the viewpoint of increasing the compressive strength of the foamed molded product, the melting point $Tm_1$ of the polypropylene-based resin extruded expanded particles in the first temperature increase is preferably not lower than 142.0°C and lower than 155.0°C, and more preferably not lower than 150.0°C and lower than 155.0°C.

The melting point $Tm_1$ of the polypropylene-based resin extruded expanded particles in the first temperature increase is a value determined by measurement in differential scanning calorimetry (hereinafter referred to as "DSC method"). As a differential scanning calorimeter, it is possible to use, for example, a differential scanning calorimeter of a DSC6200 type available from Seiko Instruments Inc.

An example of a method for measuring the melting point $Tm_1$ of the polypropylene-based resin extruded expanded particles in the first temperature increase in differential scanning calorimetry is as follows. The measurement is carried out while increasing the temperature of the polypropylene-based resin extruded expanded particles from 40°C to 220°C at a temperature increase rate of 10°C/min. A temperature corresponding to a peak (melting peak) of a DSC curve, obtained in a single temperature increase (the first temperature increase), of the extruded expanded particles can be determined as being the melting point $Tm_1$ of the polypropylene-based resin extruded expanded particles. Note that, in a case where as a result of carrying out the above-described method, there is more than one peak (melting peak) in the DSC curve obtained in a single temperature increase (the first temperature increase), a temperature corresponding to a peak (melting peak) at which the melting heat quantity is the greatest is defined as the melting point $Tm_1$ of the polypropylene-based resin extruded expanded particles.

(Bulk density)

The present extruded expanded particles have a bulk density which is preferably 30 g/L to 600 g/L, more preferably 45 g/L to 350 g/L, even more preferably 60 g/L to 200 g/L, and particularly preferably 60 g/L to 70 g/L. This configuration offers the advantage that a polypropylene-based resin in-mold foamed molded product obtained with use of the extruded expanded particles exerts, to a greater degree, characteristics such as the property of being formed in any shape, shock-absorbing properties, lightweight properties, and heat insulating properties. Further, the bulk density of the present extruded expanded particles being within the above-described range offers the advantage that the extruded expanded particles have excellent low pressure moldability and are capable of providing a foamed molded product having excellent compressive strength. In a case where extruded expanded particles obtained by production of the extruded expanded particles have an expansion ratio which does not fall within the above range, a method (e.g., the method disclosed in Japanese Patent Application Publication, Tokukaihei, No. 10-237212) can also be applied to the obtained extruded expanded particles, the method being increasing the expanding ratio of the obtained extruded expanded particles by pressurizing the insides of the obtained extruded expanded particles with an inert gas and then heating these extruded expanded particles.

In the present specification, the bulk density of the polypropylene-based resin extruded expanded particles is calculated by carrying out the following (1) to (3) in sequence: (1) a container having a known volume Vk (L), such as a graduated cylinder, a beaker, or a bucket, is filled with the extruded expanded particles to the brim; (2) the powder surface (the top surface) of the container is leveled, and the weight Wb (g) of the extruded expanded particles inside the container is measured; and (3) the bulk density of the extruded expanded particles is calculated from the following expression:

$$\text{Bulk density (g/L)} = \text{weight Wb (g) of expanded particles} / \text{volume Vk (L) of container}.$$

(Open cell ratio)

It is more preferable that the present extruded expanded particles have a lower open cell ratio. The open cell ratio of the present extruded expanded particles is preferably not more than 10.0%, more preferably not more than 9.0%, more preferably not more than 8.0%, more preferably not more than 5.0%, more preferably not more than 2.0%, more preferably not more than 1.5%, even more preferably not more than 1.4%, still even more preferably not more than 1.3%, and particularly preferably not more than 1.2%. The lower limit of the open cell ratio of the present extruded expanded particles is not particularly limited, and is, for example, not less than 0.0%. This configuration offers the following advantages (a) and (b): (a) the cells of the extruded expanded particles rarely break and contract at the time of the molding of the extruded expanded particles, and the extruded expanded particles are thus excellent in moldability; and (b) the foamed molded product obtained with use of the extruded expanded particles exerts, to a greater degree, characteristics such as the property of being formed in any shape, shock-absorbing properties, lightweight properties, compressive strength, and heat insulating properties. Further, the open cell ratio of the present extruded expanded particles being within the above-described range offers the advantage that the extruded expanded particles have excellent low pressure moldability and are capable of providing a foamed molded product having excellent compressive strength.

In the present specification, the open cell ratio of the polypropylene-based resin extruded expanded particles is determined by measurement with use of an air-comparison pycnometer [Model 1000, available from TOKYO SCIENCE CO., LTD.] in accordance with the methods described in PROCEDURE C of ASTM D2856-87. Specifically, the open cell ratio of the extruded expanded particles is calculated by carrying out the following (1) to (3) in sequence: (1) a volume Vc (cm$^3$) of the extruded expanded particles is measured with use of the air-comparison pycnometer; (2) subsequently, the whole extruded expanded particles whose Vc has been measured are submerged in ethanol contained in a graduated cylinder; (3) thereafter, an apparent volume Va (cm$^3$) of the extruded expanded particles is determined from the amount of increase in position of the ethanol in the graduated cylinder; and (4) the open cell ratio of the extruded expanded particles is calculated by the following expression: Open cell ratio (%) = ((Va-Vc) × 100) / Va. This method of measuring the volume Va is also referred to as a submersion method.

The present extruded expanded particles have excellent low pressure moldability. In the present specification, having the "excellent low pressure moldability" means that the minimum steam pressure, which will be described later, is low.

As described above, the present extruded expanded particles have the advantage of being capable of providing a foamed molded product having excellent compressive strength (for example, compressive strength at 50% compression which will be described later). In an embodiment of the present invention, in a case where, for example, the extruded expanded particles are used to prepare a polypropylene-based resin foamed molded product having a density of 80 g/L to 90 g/L, the compressive strength at 50% compression of the foamed molded product is preferably not less than 0.30 MPa, more preferably not less than 0.33 MPa, more preferably not less than 0.34 MPa, more preferably not less than 0.35 MPa, and particularly preferably not less than 0.36 MPa. This configuration offers the advantage that the obtained foamed molded product easily exhibits good shock-absorbing properties.

[3. Method for producing polypropylene-based resin extruded expanded particles]

A method for producing polypropylene-based resin extruded expanded particles in accordance with an embodiment of the present invention is a method for producing the polypropylene-based resin extruded expanded particles described in the section [2. Polypropylene-based resin extruded expanded particles],

the method for producing polypropylene-based resin extruded expanded particles including: a preparation step of preparing a polypropylene-based resin (A) having a branched structure and a polypropylene-based resin (B) having a branched structure; and an extrusion-expansion step of preparing the polypropylene-based resin extruded expanded particles,
the preparation step including a first melting and kneading step of melting and kneading a first mixture that contains (a) a linear polypropylene-based resin, (b) at least one type of monomer selected from the group consisting of a conjugated diene and a vinyl aromatic compound, and (c) a radical polymerization initiator,
the first melting and kneading step including preparing the polypropylene-based resin (A) and the polypropylene-based resin (B) separately,
the extrusion-expansion step including a second melting and kneading step of melting and kneading a composition that contains a second mixture and a blowing agent, the second mixture containing the polypropylene-based resin (A) and the polypropylene-based resin (B).

A method for producing polypropylene-based resin extruded expanded particles in accordance with an embodiment of the present invention is a method for producing the polypropylene-based resin extruded expanded particles described in the section [2. Polypropylene-based resin extruded expanded particles],

the method for producing polypropylene-based resin extruded expanded particles including: a preparation step of preparing the polypropylene-based resin (A) having a branched structure and the polypropylene-based resin (B) having a branched structure; and an extrusion-expansion step of preparing the polypropylene-based resin extruded expanded particles,
the preparation step including a first melting and kneading step of melting and kneading a first mixture that contains (a) a linear polypropylene-based resin, (b) at least one type of monomer selected from the group consisting of a conjugated diene and a vinyl aromatic compound, and (c) a radical polymerization initiator,
the first melting and kneading step including preparing the polypropylene-based resin with use of, as (a) the linear polypropylene-based resin, a mixture of (a-1) a linear polypropylene-based resin (A') having a melting point $Tm_{3A}$ of not lower than 130.0°C and lower than 150.0°C and (a-2) a linear polypropylene-based resin (B') having a melting point $Tm_{3B}$ of not lower than 150.0°C and lower than 170.0°C,
the extrusion-expansion step including a second melting and kneading step of melting and kneading a composition that contains a second mixture and a blowing agent, the second mixture containing the polypropylene-based resin.

In the present specification, "method for producing polypropylene-based resin extruded expanded particles in accordance with an embodiment of the present invention" can be referred to as the "present production method". In the present specification, "at least one type of monomer selected from the group consisting of a conjugated diene and a vinyl aromatic compound" can be referred to as a "conjugated diene, etc.".

The present production method, which has the above features, has the advantage of being capable of providing extruded expanded particles that have excellent low pressure moldability and are capable of providing a foamed molded product having excellent compressive strength. Further, with the present production method, which has the above configurations, it is possible to provide polypropylene-based resin extruded expanded particles whose melting point $Tm_1$ in the first temperature increase is not less than 130°C and less than 155°C.

(Linear polypropylene-based resin)

For the linear polypropylene-based resin, see the above descriptions in the item (Linear polypropylene-based resin) of the section [2. Polypropylene-based resin extruded expanded particles].

(Conjugated diene etc.)

Examples of the conjugated diene compound encompass butadiene, isoprene, 1,3-heptadiene, 2,3-dimethylbutadiene, and 2,5-dimethyl-2,4-hexadiene. One of these conjugated diene compounds may be used solely, or at least two of these diene compounds may be used in combination. Among these conjugated diene compounds, butadiene and isoprene are particularly preferable in terms of (a) being inexpensively handled and (b) making a reaction easy to proceed uniformly.

Examples of the vinyl aromatic compound encompass styrene; methylstyrenes such as o-methylstyrene, m-methylstyrene, p-methylstyrene, α-methylstyrene, β-methylstyrene, dimethylstyrene, and trimethylstyrene; chlorostyrenes such as α-chlorostyrene, β-chlorostyrene, o-chlorostyrene, m-chlorostyrene, p-chlorostyrene, dichlorostyrene, and trichlorostyrene; bromostyrenes such as o-bromostyrene, m-bromostyrene, p-bromostyrene, dibromostyrene, and tribromostyrene; fluorostyrenes such as o-fluorostyrene, m-fluorostyrene, p-fluorostyrene, difluorostyrene, and trifluorostyrene; nitrostyrenes such as o-nitrostyrene, m-nitrostyrene, p-nitrostyrene, dinitrostyrene, and trinitrostyrene; vinylphenols such as o-hydroxystyrene, m-hydroxystyrene, p-hydroxystyrene, dihydroxystyrene, and trihydroxystyrene; divinylbenzenes such as o-divinylbenzene, m-divinylbenzene, and p-divinylbenzene; and isopropenyl styrenes such as o-diisopropenylbenzene, m-diisopropenylbenzene, and p-diisopropenylbenzene. Among the above-described vinyl aromatic compounds, styrene and/or methylstyrene are/is preferable in terms of (a) being inexpensively handled and (b) making a reaction easy to proceed uniformly.

The amount of the conjugated diene etc. used in the first melting and kneading step is preferably 0.01 parts by weight to 5.00 parts by weight, more preferably 0.10 parts by weight to 3.00 parts by weight, more preferably 0.10 parts by weight to 2.00 parts by weight, more preferably 0.20 parts by weight to 1.50 parts by weight, even more preferably 0.30 parts by weight to 1.00 parts by weight, and particularly preferably 0.40 parts by weight to 0.80 parts by weight, relative to 100 parts by weight of the linear polypropylene-based resin. When the amount of the conjugated diene etc. used is greater, the branched polypropylene-based resin obtained tends to have a smaller MFR and a lower melt elongation, i.e., the base resin also tends to have a smaller MFR and a lower melt elongation. Conversely, when the amount of the conjugated diene etc. used is smaller, the branched polypropylene-based resin obtained tends to have a greater MFR and a higher melt elongation, that is, the base resin tends to have a greater MFR and a higher melt elongation.

In the first melting and kneading step, a monomer copolymerizable with the conjugated diene etc. may be used in combination, in addition to a random polypropylene resin, the conjugated diene etc., and a radical polymerization initiator, to the extent that the effect of an embodiment of the present invention is not impaired. In other words, the first mixture in the present production method may further contain a monomer copolymerizable with the conjugated diene etc. Examples of the monomer copolymerizable with the conjugated diene etc. encompass: (a) acrylic esters such as vinyl chloride, vinylidene chloride, acrylonitrile, methacrylonitrile, acrylamide, methacrylamide, vinyl acetate, acrylic acid, methacrylic acid, maleic acid, maleic anhydride, acrylic metal salt, methacrylic metal salt, methyl acrylate, ethyl acrylate, butyl acrylate, 2-ethylhexyl acrylate, and stearyl acrylate; and (b) methacrylic esters such as methyl methacrylate, ethyl methacrylate, butyl methacrylate, 2-ethylhexyl methacrylate, and stearyl methacrylate.

(Radical polymerization initiator)

The radical polymerization initiator is an organic peroxide having the ability to abstract hydrogen from a polypropylene-based resin and a conjugated diene compound. Examples of a radical polymerization initiator suitably used in an embodiment of the present invention encompass an organic peroxide such as ketone peroxide, peroxy ketal, hydroperoxide, dialkyl peroxide, diacyl peroxide, peroxy dicarbonate, and a peroxy ester.

The organic peroxide particularly preferably has high hydrogen-abstracting ability. Examples of the organic peroxide having high hydrogen-abstracting ability suitably encompass: peroxy ketal such as 1,1-bis(t-butyl peroxy)3,3,5-trimethylcyclohexane, 1,1-bis(t-butyl peroxy)cyclohexane, n-butyl 4,4-bis(t-butyl peroxy)valerate, and 2,2-bis(t-butyl peroxy)butane; dialkyl peroxide such as dicumyl peroxide, 2,5-dimethyl-2,5-di(t-butyl peroxy)hexane, a,a'-bis(t-butyl peroxy-m-isopropyl)benzene, t-butyl cumyl peroxide, di-t-butyl peroxide, and 2,5-dimethyl-2,5-di(t-butyl peroxy)-3-hexyne; diacyl peroxide such as benzoyl peroxide; and peroxy esters such as t-butyl peroxy octoate, t-butyl peroxy isobutyrate, t-butyl peroxy laurate, t-butyl peroxy 3,5,5-trimethylhexanoate, t-butyl peroxy isopropylcarbonate, 2,5-dimethyl-2,5-di(benzoyl peroxy)hexane, t-butyl peroxy acetate, t-butyl peroxy benzoate, and di-t-butyl peroxy isophthalate. Among these organic peroxides, t-butyl peroxy isopropylcarbonate and/or t-butyl peroxy benzoate are/is preferable. One of these organic peroxides may be used solely, or at least two types of organic peroxides may be used in combination.

The amount of the radical polymerization initiator used in the first melting and kneading step is not particularly limited, but is preferably 0.01 parts by weight to 5.00 parts by weight, more preferably 0.10 parts by weight to 3.00 parts by weight, more preferably 0.10 parts by weight to 2.50 parts by weight, more preferably 0.10 parts by weight to 2.00 parts by weight, more preferably 0.30 parts by weight to 2.00 parts by weight, more preferably 0.50 parts by weight to 1.90 parts by weight, even more preferably 0.80 parts by weight to 1.90 parts by weight, and particularly preferably 1.0 parts by weight to 1.70 parts by weight, relative to 100 parts by weight of the linear polypropylene-based resin.

The following description will discuss the effect exerted, in the present production method, by the conjugated diene etc. and the radical polymerization initiator on the melt elongation and the MFR of the base resin of the obtained branched polypropylene-based resin and the obtained extruded expanded particles, with some inferences being included. Note that an embodiment of the present invention is in no way limited to the following description.

In the present production method, the radical polymerization initiator is a component which initiates a reaction by abstracting hydrogen on the main chain of the (a) linear polypropylene-based resin. Typically, in a case where the (a) linear polypropylene-based resin and the (c) radical polymerization initiator are melted and kneaded, the hydrogen abstraction reaction is followed by the chain reaction of molecular chain scissions of the (a) linear polypropylene-based resin, and therefore, the MFR of the base resin significantly increases.

In the present production method, the (a) linear polypropylene-based resin is used in combination with the (c) radical polymerization initiator and the (b) conjugated diene etc. As a result, in the present production method, by the addition of the (b) conjugated diene etc. to the linear polypropylene-based resin molecule that has undergone hydrogen abstraction reaction, the above-described reaction of molecular chain scission of the linear polypropylene-based resin can be inhibited. Further, in the present production method, by the progress of the reaction of addition of the (b) conjugated diene etc. to the linear polypropylene-based resin molecule that has undergone hydrogen abstraction reaction, a branched structure derived from the conjugated diene etc. is formed in the linear polypropylene-based resin. Further, in the present production method, a dimerization reaction proceeds among molecules of the linear polypropylene-based resin having formed therein the branched structure derived from the conjugated diene etc., and as such a reaction proceeds, a crosslinked structure is generated. It is considered that by the progress of the series of reactions above, a branched polypropylene-based resin is obtained through the present production method. In addition, in parallel with the series of reactions, the reaction of molecular chain scission of the above-described linear polypropylene-based resin can also proceed. Thus, in the present production method, it is possible to adjust the melt elongations and the MFR of the branched polypropylene resin obtained and the base resin of the extruded expanded particles obtained, by appropriately adjusting the amount of the (b) conjugated diene etc. blended relative to the (a) linear polypropylene-based resin and the amount of the (c) radical polymerization initiator blended relative to the (a) linear polypropylene-based resin.

It can be said that the radical polymerization initiator is a component which determines the degree of progress of the above reaction of molecular chain scission of the linear polypropylene-based resin and the degree of progress of the above reaction of production of a branched structure derived from the conjugated diene etc. and/or a crosslinked structure of the linear polypropylene-based resin. Further, it is possible to adjust the balance of the degree of progress between the reaction of molecular chain scission and the reaction of production of the branched structure and/or the crosslinked structure, by changing the ratio of the amount (part by weight) of the conjugated diene etc. used to the amount (part by weight) of the radical polymerization initiator used (the amount of the conjugated diene etc. used / the amount of the radical polymerization initiator used).

As the ratio (the amount of the conjugated diene etc. used / the amount of the radical polymerization initiator used) is increased, the reaction of production of the branched structure and/or the crosslinked structure takes precedence over the reaction of molecular chain scission. As a result, as the ratio is increased, the branched polypropylene resin obtained and the base resin of the extruded expanded particles obtained tend to have lower melt elongations and smaller MFRs. As the ratio (the amount of the conjugated diene etc. used / the amount of the radical polymerization initiator used) is decreased, the reaction of molecular chain scission takes precedence over the reaction of production of the branched structure and/or the crosslinked structure. As a result, as the ratio is decreased, the branched polypropylene resin obtained and the base resin of the extruded expanded particles obtained tend to have higher melt elongations and greater MFRs.

The ratio (the amount of the conjugated diene etc. used / the amount of the radical polymerization initiator used) is not particularly limited, but is preferably 0.05 to 5.00, more preferably 0.10 to 3.00, even more preferably 0.20 to 2.00, still even more preferably 0.25 to 1.00, and particularly preferably 0.30 to 0.70. With this configuration, it is possible to obtain extruded expanded particles that contain a base resin having a melt elongation and an MFR which are within the above-described ranges. This offers the advantage that the extruded expanded particles obtained have excellent low pressure moldability and are capable of providing a foamed molded product having excellent compressive strength.

As described above, it is possible to adjust the melt elongations and the MFRs of the branched polypropylene resin obtained and the base resin of the extruded expanded particles obtained within the above-described ranges, by adjusting, as appropriate, the amounts of the (a) linear polypropylene-based resin, the (b) conjugated diene etc., and the (c) radical polymerization initiator used. In addition, it is possible to obtain extruded expanded particles having a low open cell ratio, by adjusting the melt elongation and the MFR of the base resin of the extruded expanded particles within the above-described ranges. This offers the advantage that the extruded expanded particles obtained have excellent low pressure moldability and are capable of providing a foamed molded product having excellent compressive strength.

(Other component(s))

As necessary, the first mixture may further contain, as other component(s), (a) a stabilizer(s) such as an antioxidant, a metal deactivator, a phosphorous processing stabilizer, an ultraviolet absorber, an ultraviolet stabilizer, a fluorescent brightening agent, metallic soap, and an antacid adsorbent and/or (b) an additive(s) such as a cell adjusting agent, a coloring agent, a crosslinking agent, a chain transfer agent, a lubricant, a plasticizer, a filler, a reinforcer, a flame retardant, and an antistatic agent. One of these other components may be used solely, or at least two of these other components may be used in combination.

(2-1. Preparation step)

It can also be said that the preparation step is a step of preparing a branched polypropylene-based resin with use of at least one type of monomer selected from the group consisting of a conjugated diene and a vinyl aromatic compound. In the preparation step, it is possible to (i) prepare a polypropylene-based resin (A) and a polypropylene-based resin (B) in the form of respective molecules independent of each other or (ii) prepare a branched polypropylene-based resin that contains, within a single molecule (a single polymer), a polypropylene-based resin (A) and a polypropylene-based resin (B) which are in a state of being crosslinked with each other.

(First melting and kneading step)

It can also be said that the first melting and kneading step is a step of preparing a melted and kneaded product of the first mixture that contains the linear polypropylene-based resin, the conjugated diene etc., and the radical polymerization initiator. Further, it can also be said that the first melting and kneading step is a step of causing the conjugated diene compound and the radical polymerization initiator to react with the linear polypropylene-based resin to thereby (i) separately prepare (obtain) (i-1) a branched polypropylene-based resin (A) and (i-2) a branched polypropylene-based resin (B) or (ii) prepare (obtain) a branched polypropylene-based resin containing, within a single molecule (a single polymer), a polypropylene-based resin (A) and a polypropylene-based resin (B) which are in a state of being crosslinked with each other.

The device which can be used in the first melting and kneading step includes a melting and kneading device for melting and kneading the first mixture. Examples of such a melting and kneading device encompass (a) kneaders such as a roller mill, a Ko-kneader, a Banbury mixer, a Brabender, a single screw extruder having a single screw, and a multi-screw extruder having multiple screws (e.g., a twin screw extruder having two screws), (b) horizontal stirrers such as a multi-screw surface renewal device and a multi-screw multi-disk device; and (c) vertical stirrers such as a double helical ribbon stirrer. Among these devices, it is preferable to use the kneaders as the melting and kneading device, in terms of the capability to continuously knead the first mixture and the easiness of scale-up, and among the kneaders, it is more preferable to use the extruders, it is even more preferable to use the multi-screw extruder, and it is particularly preferable to use the twin screw extruder, in terms of productivity.

A device (e.g., the melting and kneading device) which can be used in the first melting and kneading step preferably has a die provided at the end of the device in the extruding direction. The die has at least one hole (which may also be referred to as a discharge hole) for discharging the first mixture that has been melted and kneaded. The number and diameter of holes provided in the die and a thickness of the die (a length of each hole in the extruding direction) are not particularly limited.

The melted and kneaded product, obtained in the first melting and kneading step, of the first mixture is a branched polypropylene-based resin.

The following description will discuss a case of separately preparing a polypropylene-based resin (A) and a polypropylene-based resin (B) in the first melting and kneading step. In this case, (i) a linear polypropylene-based resin (A') having a melting point $Tm_2$ of not lower than 130.0°C and lower than 150.0°C can be used to prepare a melted and kneaded product of the branched polypropylene-based resin (A), and (ii) separately, a linear polypropylene-based resin (B') having a melting point $Tm_2$ of not lower than 150.0°C and lower than 170.0°C can be used to prepare a melted and kneaded product of the branched polypropylene-based resin (B). In this case, more specifically, (i) a first mixture containing (a) a linear polypropylene-based resin (A') having a melting point $Tm_2$ of not lower than 130.0°C and lower than 150.0°C, (b) at least one type of monomer selected from the group consisting of a conjugated diene and a vinyl aromatic compound, and (c) a radical polymerization initiator is melted and kneaded, and separately, (ii) a first mixture containing (a) a linear polypropylene-based resin (B') having a melting point $Tm_2$ of not lower than 150°C.0 and lower than 170.0°C, (b) at least one type of monomer selected from the group consisting of a conjugated diene and a vinyl aromatic compound, and (c) a radical polymerization initiator is melted and kneaded. Then, the melted and kneaded product of the branched polypropylene-based resin (A) and the melted and kneaded product of the branched polypropylene-based resin (B) thus separately obtained can be separately subjected to a discharging step to produce differing respective sets of resin particles, and the obtained set of resin particles of the branched polypropylene-based resin (A) and the obtained set of resin particles of the branched polypropylene-based resin (B) can be mixed together to be used as a second mixture.

The following description will discuss a case of preparing, in the first melting and kneading step, a branched polypropylene-based resin that contains, within a single molecule (a single polymer), a polypropylene-based resin (A) and a polypropylene-based resin (B) which are in a state of being crosslinked with each other. In this case, a mixture of (i) a linear polypropylene-based resin (A') having a melting point $Tm_2$ of not lower than 130.0°C and lower than 150.0°C and (ii) a linear polypropylene-based resin (B') having a melting point $Tm_2$ of not lower than 150.0°C and lower than 170.0°C can be used as linear polypropylene-based resins. In this case, more specifically, a first mixture containing the following (a), (b), and (c) can be melted and kneaded: (a) a mixture of a linear polypropylene-based resin (A') having a

melting point $Tm_2$ of not lower than 130.0°C and lower than 150.0°C and (a-2) a linear polypropylene-based resin (B') having a melting point $Tm_2$ of not lower than 150.0°C and lower than 170.0°C; (b) at least one type of monomer selected from the group consisting of a conjugated diene and a vinyl aromatic compound; and (c) a radical polymerization initiator. Further, in this case, relative to 100% by weight of a total of the linear polypropylene-based resin (A') and the linear polypropylene-based resin (B'), the mixture containing the linear polypropylene-based resin (A') and the linear polypropylene-based resin (B') (i) preferably contains more than 70% by weight and not more than 98% by weight of the linear polypropylene-based resin (A') and not less than 2% by weight and less than 30% by weight of the linear polypropylene-based resin (B'), (ii) more preferably contains more than 75% by weight and not more than 98% by weight of the linear polypropylene-based resin (A') and not less than 2% by weight and less than 25% by weight of the linear polypropylene-based resin (B'), (iii) more preferably contains more than 80% by weight and not more than 98% by weight of the linear polypropylene-based resin (A') and not less than 2% by weight and less than 20% by weight of the linear polypropylene-based resin (B'), and (iv) even more preferably contains not less than 85% by weight and not more than 95% by weight of the linear polypropylene-based resin (A') and not less than 5% by weight and not more than 15% by weight of the linear polypropylene-based resin (B'). This configuration makes it possible to enhance low pressure moldability of the extruded expanded particles. After the melting and kneading of the first mixture, a resultant melted and kneaded product of a branched polypropylene-based resin can be subjected to a discharging step to produce resin particles. The resin particles of the branched polypropylene-based resin thus obtained each contain, within a single molecule (a single polymer), the polypropylene-based resin (A) and the polypropylene-based resin (B) which are in a state of being crosslinked with each other.

(First mixture preparation step)

The preparation step may include a first mixture preparation step of obtaining a first mixture before the melting and kneading step. In the first mixture preparation step, the order and the method in which the first mixture is obtained by mixing the linear polypropylene-based resin, the conjugated diene etc., and the radical polymerization initiator are not particularly limited, but examples thereof include the following methods (a) to (d):

(a) a method for preparing the first mixture by mixing the linear polypropylene-based resin that is unmelted, the conjugated diene etc., and the radical polymerization initiator, simultaneously or in no particular order;
(b) a method for preparing the first mixture by feeding, into a device, the linear polypropylene-based resin that is unmelted so that this linear polypropylene-based resin is melted and kneaded, and thereafter, feeding, simultaneously or separately, the conjugated diene etc. and the radical polymerization initiator, into the linear polypropylene-based resin that has been partially or completely melted and kneaded;
(c) a method for preparing the first mixture by feeding, into a device, the linear polypropylene-based resin that is unmelted and the radical polymerization initiator simultaneously or separately so that these linear polypropylene-based resin and radical polymerization initiator are melted and kneaded, and thereafter, feeding the conjugated diene etc. into the linear polypropylene-based resin and the radical polymerization initiator that have been partially or completely melted and kneaded; and
(d) a method for preparing the first mixture by feeding, into a device, the linear polypropylene-based resin that is unmelted and the conjugated diene etc. simultaneously or separately, so that these linear polypropylene-based resin and conjugated diene etc. are melted and kneaded, and thereafter, feeding the radical polymerization initiator into the linear polypropylene-based resin and the conjugated diene etc. that has been partially or completely melted and kneaded.

The methods (b) to (d) are preferable because, in each of these methods, the polypropylene-based resin in the first mixture comes into a partially or completely melt state at the beginning of the melting and kneading step. The device used in each of the methods (b) through (d) may be the same as the device used in the subsequent first melting and kneading step. Sequentially carrying out the first mixture preparation step and the melting and kneading step in the same device offers the advantages in terms of, for example, efficiency and the environment. The conjugated diene etc. is typically highly volatile. It is therefore desirable that the conjugated diene etc. be added in a manner which prevents the emission of the conjugated diene etc. Thus, the method (c) is more preferable because the reaction easily proceeds uniformly in the melting and kneading step according to the method (c), and the following method is even more preferable: a method for preparing the first mixture by: feeding, into a device, the linear polypropylene-based resin that is unmelted so that this linear polypropylene-based resin is melted and kneaded; thereafter, feeding the radical polymerization initiator into the linear polypropylene-based resin that is partially or completely melted and kneaded so that these linear polypropylene-based resin and radical polymerization initiator are melted and kneaded; and feeding the conjugated diene etc. into the linear polypropylene-based resin and the radical polymerization initiator that are partially or completely melted and kneaded.

(Discharging step)

The preparation step may further include a discharging step of discharging, through the die of the device, the melted and kneaded product of the first mixture obtained in the first melting and kneading step (i.e., the branched polypropylene-based resin). In the discharging step, at a temperature that allows the branched polypropylene-based resin to be discharged through the hole in the die, the branched polypropylene-based resin is discharged in the form of a strand through the die. It is possible to obtain the branched polypropylene-based resin that has a desired shape and size, by cooling and cutting the branched polypropylene-based resin (also referred to as merely "strand") discharged in the form of a strand. A method of cooling the strand is not limited to any particular one. For example, water cooling in which water is used can be employed. The strand may be cut after being cooled or may be cooled and cut simultaneously.

(2-2. Extrusion expansion step)

It can also be said that the extrusion-expansion step is a step of expanding a second mixture which contains the branched polypropylene-based resin.

(Second melting and kneading step)

It can also be said that the second melting and kneading step is a step of preparing a melted and kneaded product of a composition (which may hereinafter be referred to as a melted and kneaded composition) that contains: the second mixture containing the branched polypropylene-based resin; and a blowing agent. In other words, it can also be said that the second melting and kneading step is (i) a step of preparing a melted and kneaded product of a composition containing a second mixture and a blowing agent, the second mixture containing a branched polypropylene-based resin (A) and a branched polypropylene-based resin (B) or (ii) a step of preparing a melted and kneaded product of a composition containing a second mixture and a blowing agent, the second mixture containing a branched polypropylene-based resin containing, within a single molecule (a single polymer), a polypropylene-based resin (A) and a polypropylene-based resin (B) which are in a state of being crosslinked with each other. That is, in the second melting and kneading step, it is only required that a composition be melted and kneaded ultimately, the composition containing: a second mixture containing a branched polypropylene-based resin: and a blowing agent.

The following description will discuss a case in which a melted and kneaded product of a composition containing a second mixture and a blowing agent is prepared in the second melting and kneading step, the second mixture containing a branched polypropylene-based resin (A) and a branched polypropylene-based resin (B). In this case, relative to 100% by weight of a total of the branched polypropylene-based resin (A) and the branched polypropylene-based resin (B), the melted and kneaded product (i) contains more than 70% by weight and not more than 98% by weight of the branched polypropylene-based resin (A) and not less than 2% by weight and less than 30% by weight of the branched polypropylene-based resin (B), (ii) preferably contains more than 75% by weight and not more than 98% by weight of the branched polypropylene-based resin (A) and not less than 2% by weight and less than 25% by weight of the branched polypropylene-based resin (B), (iii) more preferably contains more than 80% by weight and not more than 98% by weight of the branched polypropylene-based resin (A) and not less than 2% by weight and less than 20% by weight of the branched polypropylene-based resin (B), and (iv) even more preferably contains not less than 85% by weight and not more than 95% by weight of the branched polypropylene-based resin (A) and not less than 5% by weight and not more than 15% by weight of the branched polypropylene-based resin (B). This configuration makes it possible to enhance low pressure moldability of the extruded expanded particles.

Specific examples of the second melting and kneading step encompass the following methods (a) through (c):

(a) a method of mixing or blending the branched polypropylene-based resin and the blowing agent along with the another resin, the cell nucleating agent, and the additional component that are optional, to prepare a composition, and then melting and kneading the composition;

(b) a method of mixing or blending the branched polypropylene-based resin and the blowing agent and melting and kneading a composition thereby obtained, then optionally adding the another resin, the cell nucleating agent, and the other component(s) to the composition, and then further melting and kneading a composition thereby obtained; and

(c) a method of (c-1) mixing or blending the branched polypropylene-based resin along with the another resin, the cell nucleating agent, and the other component(s) that are optional, to prepare the second mixture, and then melting and kneading the second mixture, and (c-2) adding the blowing agent to the second mixture thereby obtained to prepare a composition and then further melting and kneading the composition.

In any of the above-described methods (a) to (c), the method and the order of adding the another resin, the cell nucleating agent, and the other component(s) that are optionally used are not particularly limited. The another resin, the cell nucleating agent, and the other component(s) that are optionally used may be added simultaneously, or may be added separately and in no particular order.

The second melting and kneading step may further include a step of, after melting and kneading the composition by, for example, any of the above-described methods (a) through (c), decreasing the temperature of the melted and kneaded composition such that the temperature falls within a range in which the melted and kneaded composition does not solidify.

Examples of a device used in the second melting and kneading step encompass a melting and kneading device for melting and kneading the second mixture. The melting and kneading device used in the second melting and kneading step includes a melting and kneading device which is exemplified by the first melting and kneading step. As in the first melting and kneading step, it is preferable to use the kneaders as the melting and kneading device used in the second melting and kneading step. Among the kneaders, it is more preferable to use the extruders in terms of productivity, it is even more preferable to use a multi-screw extruder, and it is particularly preferable to use a twin screw extruder. Using the extruders as the melting and kneading device in the second melting and kneading step offers the advantage that the blowing agent that has been injected does not flow back to the upstream of the device due to the screw configuration of the extruders.

The device (e.g., the melting and kneading device) which can be used in the second melting and kneading step preferably has a die provided at the end of the device in the extruding direction. The die is as described in the section (First melting and kneading step).

The device which can be used in the second melting and kneading step may further include a cooling device provided between the melting and kneading device and the die for decreasing the temperature of the melted and kneaded composition. Examples of the cooling device can encompass a single screw extruder, a static mixer, and a melt cooler which are provided downstream of the kneading device. One of the above cooling devices may be used solely, or at least two of these cooling devices may be used in combination. The device which can be used in the second melting and kneading step may further include a gear pump provided between the melting and kneading device and the die (e.g., between the melting and kneading device and the cooling device and/or between the cooling device and the die) for increasing the stability of discharge of the composition. The device which can be used in the second melting and kneading step may further include a diverter valve provided between the melting and kneading device and the die.

(Blowing agent)

The blowing agent that can be used in the present production method is not particularly limited, provided that the blowing agent is a commonly used blowing agent that is used in extrusion expansion. Examples of the blowing agent encompass: (a) physical blowing agents such as (a-1) aliphatic hydrocarbons such as propane, normal butane, isobutane, normal pentane, isopentane, and hexane, (a-2) alicyclic hydrocarbons such as cyclopentane and cyclobutane, (a-3) ethers such as dimethyl ether, diethyl ether, and methyl ethyl ether, (a-4) alcohols such as methanol and ethanol, (a-5) inorganic gases such as air, nitrogen and carbon dioxide, and (a-6) water; and (b) chemical blowing agents that encompass pyrolytic blowing agents such as sodium bicarbonate, azodicarbonamide, and dinitroso pentamethylene tetramine.

In the present production method, in terms of low production costs and low load on the environment, the blowing agent is preferably inorganic gas and more preferably carbon dioxide. In order to achieve a low production cost and a low environmental load, it is preferable that only carbon dioxide is used as the blowing agent, and that the blowing agent substantially does not contain, other than the carbon dioxide, any blowing agents which are described above as an example of the blowing agent. Specifically, the amount of the substance which is other than carbon dioxide, which can function as a blowing agent, and which is contained in the composition is preferably not more than 0.01 parts by weight, more preferably not more than 0.001 parts by weight, even more preferably not more than 0.0001 parts by weight, and particularly preferably 0 part by weight, with respect to 100 parts by weight of the composition.

The amount of the blowing agent used is 0.5 parts by weight to 7.0 parts by weight, more preferably 0.5 parts by weight to 6.0 parts by weight, more preferably 0.5 parts by weight to 5.0 parts by weight, even more preferably 0.5 parts by weight to 4.0 parts by weight, and particularly preferably 0.5 parts by weight to 3.0 parts by weight, relative to 100.0 parts by weight of the second mixture. In a case where the blowing agent consists solely of carbon dioxide, the "amount of the blowing agent used" can be also referred to as "amount of the carbon dioxide used" and can be also referred to as "amount of the blowing agent (carbon dioxide) contained in the second mixture".

(Extrusion step)

The extrusion expansion step may further include an extrusion step of extruding the melted and kneaded composition into a region the pressure of which is lower than the pressure inside the device, for example, through the die provided in the device. In the extrusion step, the melted and kneaded composition may be extruded into a gas phase or may be extruded into a liquid phase.

(Cutting step)

The extrusion expansion step may further include a cutting step of cutting the composition extruded in the extrusion step. The composition extruded into a region the pressure of which is lower than the pressure inside the device in the extrusion step, for example, through the die provided in the device, starts to expand immediately. In the cutting step, the composition which is expanding may be cut, or the composition which has finished expanding may be cut. In a case where the composition which is expanding is cut, the cut composition can complete the expansion in the region into which the composition is extruded. It can also be said that the cutting step is a step of cutting the composition in particulate form to prepare the polypropylene-based resin extruded expanded particles.

A method for cutting the extruded composition is not particularly limited. For example, the composition may be cut with use of a cutter or the like which is provided downstream of the die along the extruding direction. The number of blades of the cutter is also not particularly limited.

It can also be said that the extrusion step and the cut step are a series of steps for granulating the composition obtained in the second melting and kneading step into the polypropylene-based resin extruded expanded particles. As such, the extrusion step and the cutting step (the series of steps from the extrusion step to the cutting step) can also be referred to as "granulation step". In other words, the extrusion expansion step of the method for producing polypropylene-based resin extruded expanded particles in accordance with an embodiment of the present invention can further include the granulation step in addition to the second melting and kneading step.

Depending on the region into which the composition obtained in the second melting and kneading step is to be extruded and a method of cutting the composition, the granulation step can be roughly classified into two types, i.e., a cold cutting method and a die face cutting method. In other words, the granulation step can be one type selected from the group consisting of a hot cutting method, a watering cutting method, and an underwater cutting method. The cold cutting method may be a method in which (i) the composition that has been extruded through the die and that contains the blowing agent is expanded, and (ii) an expanded product in the form of strands is taken up while being cooled through a water tank and then is chopped (strand cut method). The die face cutting method is a method in which the composition that has been extruded through holes of the die is cut with a cutter that rotates while being in contact with a surface of the die or while ensuring a small gap between the cutter and the surface of the die.

The die face cutting method is further classified into the following three methods on the basis of a difference in cooling method. Specifically, the three methods are an underwater cutting (hereinafter may also be referred to as "UWC") method, a watering cutting (hereinafter may also be referred to as "WRC") method, and a hot cutting (hereinafter may also be referred to as "HC") method. The UWC method is a method in which (i) a chamber attached to a tip of the die is filled with cooling water, which has been adjusted to have a predetermined pressure, so that the cooling water is in contact with a resin discharge surface of the die, and (ii) the composition that has been extruded through the holes of the die is cut in water. The WRC method is a method in which a cooling drum that is connected to the die and that has an inner peripheral surface along which cooling water flows is disposed downstream of the die, and the composition that has been cut with the cutter in air is cooled by the cooling water while being expanded or after being expanded. The HC method is a method in which the composition is cut with the cutter in air, and the cut composition is cooled in air while being expanded or after being expanded. The HC method also includes a mist cutting method that further includes a step of spraying mixed mist of water and air.

[4. Polypropylene-based resin foamed molded product]

The polypropylene-based resin foamed molded product in accordance with an embodiment of the present invention is obtained by molding the polypropylene-based resin extruded expanded particles described in [2. Polypropylene-based resin extruded expanded particles] or the polypropylene-based extruded expanded particles obtained by the production method described in [3. Method for producing polypropylene-based resin extruded expanded particles].

A method for producing the polypropylene-based resin foamed molded product in accordance with an embodiment of the present invention, that is, a method for molding the present extruded expanded particles, is not particularly limited. For example, a known in-mold foam molding method can be employed.

As a method for molding the polypropylene-based resin foamed molded product from the polypropylene-based resin extruded expanded particles in accordance with an embodiment of the present invention, any of the following methods can be, for example, employed: (A) a method in which (i) expanded particles are pressured with use of an inorganic gas so that the expanded particles are impregnated with the inorganic gas and have given internal pressure, (ii) a mold is filled with the expanded particles, and (iii) the expanded particles are heated by steam or the like so as to be fused together (for example, Japanese Patent Publication, Tokukoushou, No. 51-22951); (B) a method in which (i) expanded particles are compressed by gas pressure, (ii) a mold is filled with the expanded particles, and (iii) the expanded particles are heated by steam or the like so as to be fused together while compression recovery of the expanded particles is utilized (for example, Japanese Patent Publication, Tokukoushou, No. 53-33996); and (C) a method in which (i) a mold whose gap is open is filled with expanded particles, (ii) the mold is closed, until the gap has a given width, so that the expand particles, with which the mold is filled, are compressed, and (iii) the expanded particles are heated by steam or the like so as to be fused together. With such methods, a foamed molded product having high compressive strength can be obtained at low molding pressure. The present invention is, needless to say, not limited to these methods.

(Physical properties of polypropylene-based resin foamed molded product)

The following description will discuss the physical properties of the foamed molded product.

(Minimum steam pressure)

There is no limitation to a minimum steam pressure of the present foamed molded product, but it is more preferable that the minimum steam pressure be lower. The present foamed molded product has a minimum steam pressure of preferably not more than 0.30 MPa, more preferably less than 0.30 MPa, more preferably less than 0.30 MPa, more preferably not more than 0.28 MPa, more preferably not more than 0.25 MPa, even more preferably not more than 0.23 MPa, and particularly preferably not more than 0.20 MPa. A lower limit value of the minimum steam pressure of the present foamed molded product is not limited, and can be, for example, 0.01 MPa, 0.05 MPa, or 0.10 MPa.

In the present specification, the minimum steam pressure of the polypropylene-based resin foamed molded product is measured by carrying out the following (1) to (3): (1) the steam pressure is changed from 0.14 MPa (gage pressure) to 0.42 MPa (gage pressure) in increments of 0.01 MPa, and at respective steam pressures, the expanded particles are molded by in-mold expansion molding in a mold to obtain foamed molded products; (2) an inner fusion ratio of each of the foamed molded products is measured; and (3) among steam pressures at each of which a foamed molded product having an inner fusion ratio of not less than 60% is obtained, the lowest pressure is defined as the minimum steam pressure.

Note that, in the present specification, an inner fusion ratio is a value obtained by measurement according to a method in which the following (1) to (4) are carried out. (1) With a cutter, a 5 mm deep cut is made perpendicularly on a given surface of the foamed molded product in a direction perpendicular to a part including the surface. (2) Then, the foamed molded product is torn along the cut by hand. (3) Out of the surface resulting from the tearing, a region other than the cut portion is visually checked to count the number of all expanded particles present in the region and the number of expanded particles broken at a portion of the region which portion is not a particle-to-particle interface (that is, expanded particles that are broken themselves). (4) The inner fusion ratio is calculated from the following expression:

$$\text{Inner fusion ratio (\%)} = \{(\text{the number of expanded particles broken at a portion of the region which portion is not a particle-to-particle interface}) / (\text{the number of all expanded particles present in the region})\} \times 100.$$

(Maximum steam pressure)

There is no particular limitation to a maximum steam pressure of the present foamed molded product. The maximum steam pressure of the present foamed molded product can be not more than 0.35 MPa, not more than 0.30 MPa, or not more than 0.25 MPa. A lower limit value of the maximum steam pressure of the present foamed molded product is not limited, and can be, for example, 0.01 MPa, 0.05 MPa, or 0.10 MPa.

In the present specification, the maximum steam pressure of the polypropylene-based resin foamed molded product is measured by carrying out (1) to (3) below. (1) The steam pressure is changed from 0.14 MPa (gage pressure) to 0.42 MPa (gage pressure) in increments of 0.01 MPa. At respective steam pressures, the expanded particles are molded by in-mold expansion molding in a mold to obtain foamed molded products. (2) The surfaces of each of the foamed molded products are checked by visual observation as to presence or absence of "melting", "shrinkage (wrinkles)", and a "sink" caused by melting of the base resin, and the surface properties of each of the foamed molded products are evaluated in accordance with the following criteria.

Good (acceptable): None of "melting", "shrinkage (wrinkles)", and a "sink" is observed on any of the surfaces of the foamed molded product.

Poor (unacceptable): At least one of "melting", "shrinkage (wrinkles)", and a "sink" is observed on any of the surfaces of the foamed molded product.

(3) Among steam pressures at each of which a foamed molded product evaluated as having "good (acceptable)" surface properties is obtained, the highest pressure is defined as the maximum steam pressure.

(Density of molded product)

The present foamed molded product has a density which is not limited but preferably 30 g/L to 600 g/L, more preferably 45 g/L to 200 g/L, even more preferably 60 g/L to 200 g/L, and particularly preferably 80 g/L to 90 g/L. The density of the molded product being within the above-described range offers the advantage that good shock-absorbing properties are easily exhibited.

In the present specification, a density of a polypropylene-based resin foamed molded product is measured by the following method. The weight Ws (g) of the obtained foamed molded product was measured. The length, width, and thickness of the foamed molded product were measured with use of a vernier caliper, and the volume Vs (cm$^3$) of the foamed molded product was calculated. The density (g/L) of the foamed molded product was calculated from the following expression:

$$\text{Density (g/L) of foamed molded product} = Ws\ /\ Vs\ \text{x}\ 1{,}000.$$

[Compressive strength]

There is no limitation to compressive strength of the present foamed molded product, but it is more preferable that the compressive strength be greater. The compressive strength of the present foamed molded product varies depending on the density of the foamed molded product. For example, in a case where the foamed molded product has a density within a range of 80 g/L to 90 g/L, the compressive strength of the foamed molded product is preferably not less than 0.30 MPa, more preferably not less than 0.33 MPa, more preferably not less than 0.34 MPa, more preferably not less than 0.35 MPa, and particularly preferably not less than 0.36 MPa. The compressive strength being within the above-described range offers the advantage that good shock-absorbing properties are easily exhibited.

In the present specification, compressive strength of a polypropylene-based resin foamed molded product is measured in terms of compressive stress (MPa) of a sample at a time when the sample, which is a test piece measuring 50 mm in length, 50 mm in width, and 25 mm in thickness cut out from the polypropylene-based resin foamed molded product, is compressed by 50% at a rate of 10 mm/min in compliance with NDZ-Z0504. As described above, compressive strength of a foamed molded product is measured in terms of compressive stress (MPa) at a time when the foamed molded product is compressed by 50%. As such, in the present specification, compressive strength of a foamed molded product may be referred to as "compressive strength at 50% compression".

[5. Method for producing polypropylene-based resin foamed molded product]

A method for producing a polypropylene-based resin foamed molded product in accordance with an embodiment of the present invention includes a step of molding polypropylene-based resin extruded expanded particles obtained by the method for producing polypropylene-based resin extruded expanded particles described in the section [3. Method for producing polypropylene-based resin extruded expanded particles].

A method for producing the present foamed molded product, that is, a method for molding the present extruded expanded particles, is not particularly limited. For example, a known in-mold foam molding method with use of a mold can be employed.

As a method for molding the polypropylene-based resin foamed molded product from the present extruded expanded particles, a method such as, for example, any of the following methods can be employed: (A) a method in which (i) extruded expanded particles are pressured with use of an inorganic gas so that the extruded expanded particles are impregnated with the inorganic gas and have given internal pressure, (ii) a mold is filled with the extruded expanded particles, and (iii) the extruded expanded particles are heated by steam or the like so as to be fused together (for example, Japanese Patent Publication, Tokukoushou, No. 51-22951); (B) a method in which (i) extruded expanded particles are compressed by gas pressure, (ii) a mold is filled with the extruded expanded particles, and (iii) the extruded expanded particles are heated by steam or the like so as to be fused together while compression recovery of the extruded expanded particles is utilized (for example, Japanese Patent Publication, Tokukoushou, No. 53-33996); and (C) a method in which (i) a mold whose gap (gap in the mold) is open is filled with extruded expanded particles, (ii) the mold is closed, until the gap (gap in the mold) has a given width, so that the extruded expand particles, with which the mold is filled, are compressed, and (iii) the extruded expanded particles are heated by steam or the like so as to be fused together. With such methods, a foamed molded product having high compressive strength can be obtained at low molding pressure. The present invention is, needless to say, not limited to these methods.

An embodiment of the present invention can be arranged as follows.

<1> Polypropylene-based resin extruded expanded particles, containing

a base resin containing (i) more than 70% by weight and not more than 98% by weight of a polypropylene-based resin (A) having a branched structure and a melting point $Tm_{2A}$ of not lower than 130.0°C and lower than 143.0°C and (ii) not less than 2% by weight and less than 30% by weight of a polypropylene-based resin (B) having a branched structure and a melting point $Tm_{2B}$ of not lower than 150.0°C and lower than 170.0°C, a total amount of the polypropylene-based resin (A) and the polypropylene-based resin (B) being 100% by weight, a melting point $Tm_1$ of the polypropylene-based resin extruded expanded particles in a first temperature increase being not lower than 130.0°C and lower than 155.0°C.

<2> The polypropylene-based resin extruded expanded particles described in <1>, in which the base resin contains the polypropylene-based resin (A) in an amount of more than 80% by weight and not more than 98% by weight and the polypropylene-based resin (B) in an amount of not less than 2% by weight and less than 20% by weight, a total amount of the polypropylene-based resin (A) and the polypropylene-based resin (B) being 100% by weight.

<3> The polypropylene-based resin extruded expanded particles described in <1> or <2>, in which the base resin has a melt elongation of 3.0 m/min to 30.0 m/min.

<4> The polypropylene-based resin extruded expanded particles described in any one of <1> to <3>, in which the base resin has a melt flow rate of 1.0 g/10 min to 20.0 g/10 min.

<5> The polypropylene-based resin extruded expanded particles described in any one of <1> to <4>, in which the polypropylene-based resin extruded expanded particles have a bulk density of 30 g/L to 600 g/L.

<6> The polypropylene-based resin extruded expanded particles described in any one of <1> to <5>, in which the polypropylene-based resin extruded expanded particles have an open cell ratio of not more than 10.0%.

<7> The polypropylene-based resin extruded expanded particles described in any one of <1> to <6>, in which a main chain of the polypropylene-based resin (A), a main chain of the polypropylene-based resin (B), and/or main chains of the polypropylene-based resins (A) and (B) are/is a propylene homopolymer, a polypropylene-based block copolymer, and/or a polypropylene-based random copolymer.

<8> The polypropylene-based resin extruded expanded particles described in any one of <1> to <7>, in which, in a case where a polypropylene-based resin foamed molded product having a density of 80 g/L to 90 g/L is prepared, the polypropylene-based resin foamed molded product has compressive strength at 50% compression of not less than 0.30 MPa.

<9> A polypropylene-based resin foamed molded product obtained by molding polypropylene-based resin extruded expanded particles described in any one of <1> to <8>.

<10>The polypropylene-based resin foamed molded product described in <9>, having a density of 80 g/L to 90 g/L and compressive strength at 50% compression of not less than 0.30 MPa.

<11> A method for producing polypropylene-based resin extruded expanded particles described in any one of <1> to <8>, the method including:

a preparation step of preparing the polypropylene-based resin (A) having a branched structure and the polypropylene-based resin (B) having a branched structure; and an extrusion-expansion step of preparing the polypropylene-based resin extruded expanded particles,
the preparation step including a first melting and kneading step of melting and kneading a first mixture that contains (a) a linear polypropylene-based resin, (b) at least one type of monomer selected from the group consisting of a conjugated diene and a vinyl aromatic compound, and (c) a radical polymerization initiator,
the first melting and kneading step including preparing the polypropylene-based resin (A) and the polypropylene-based resin (B) separately,
the extrusion-expansion step including a second melting and kneading step of melting and kneading a composition that contains a second mixture and a blowing agent, the second mixture containing the polypropylene-based resin (A) and the polypropylene-based resin (B).

<12> A method for producing polypropylene-based resin extruded expanded particles described in any one of <1> to <8>, the method including:

a preparation step of preparing the polypropylene-based resin (A) having a branched structure and the polypropylene-based resin (B) having a branched structure; and an extrusion-expansion step of preparing the polypropylene-based resin extruded expanded particles,

the preparation step including a first melting and kneading step of melting and kneading a first mixture that contains (a) a linear polypropylene-based resin, (b) at least one type of monomer selected from the group consisting of a conjugated diene and a vinyl aromatic compound, and (c) a radical polymerization initiator,

the first melting and kneading step including preparing a polypropylene-based resin having a branched structure, with use of, as (a) the linear polypropylene-based resin, a mixture of (a-1) a linear polypropylene-based resin (A') having a melting point $Tm_{3A}$ of not lower than 130.0°C and lower than 150.0°C and (a-2) a linear polypropylene-based resin (B') having a melting point $Tm_{3B}$ of not lower than 150.0°C and lower than 170.0°C, the polypropylene-based resin having the branched structure containing, within a single molecule, the polypropylene-based resin (A) and the polypropylene-based resin (B) which are in a state of being crosslinked with each other,

the extrusion-expansion step including a second melting and kneading step of melting and kneading a composition that contains a second mixture and a blowing agent, the second mixture containing the polypropylene-based resin having a branched structure.

<13> The method described in <11> or <12>, in which the at least one type of monomer selected from the group consisting of a conjugated diene and a vinyl aromatic compound in the first melting and kneading step is at least one selected from the group consisting of isoprene, butadiene, 1,3-heptadiene, 2,3-dimethylbutadiene, and 2,5-dimethyl-2,4-hexadiene.

<14> The method described in any one of <11> to <13>, in which the at least one type of monomer selected from the group consisting of a conjugated diene and a vinyl aromatic compound is used in the first melting and kneading step in an amount of 0.01 parts by weight to 5.00 parts by weight relative to 100 parts by weight of the linear polypropylene-based resin.

<15> The method described in any one of <11> to <14>, in which the radical polymerization initiator in the first melting and kneading step is at least one selected from the group consisting of t-butylperoxy isopropyl carbonate and t-butyl peroxy benzoate.

<16> The method described in any one of <11> to <15>, in which the radical polymerization initiator is used in the first melting and kneading step in an amount of 0.01 parts by weight to 5.00 parts by weight relative to 100 parts by weight of the linear polypropylene-based resin.

<17> The method described in any one of <11> to <16>, in which a ratio of the following (i) to the following (ii) is 0.05 to 5.00: (i) an amount, in parts by weight, in which the at least one type of monomer selected from the group consisting of a conjugated diene and a vinyl aromatic compound is used; and (ii) an amount, in parts by weight, in which the radical polymerization initiator is used.

<18> The method described in any one of <11> to <17>, in which the blowing agent is carbon dioxide.

<19> The method described in any one of <11> to <18>, in which the blowing agent is used in an amount of 0.5 parts by weight to 7.0 parts by weight relative to 100.0 parts by weight of the second mixture.

<20> The method described in any one of <11> to <19>, in which the extrusion expansion step further includes a granulation step,

the granulation step includes: an extrusion step of extruding the melted and kneaded composition into a region the pressure of which is lower than the pressure inside the device; and a cutting step of cutting the composition extruded in the extrusion step, and

the granulation step is one selected from the group consisting of a hot cutting method, a watering cutting method, and an underwater cutting method.

<21> A method for producing a polypropylene-based resin foamed molded product, including a molding step of molding polypropylene-based resin extruded expanded particles produced by a method described in any one of <11> to <20>.

<22> The method described in <21>, in which the molding step includes heating the polypropylene-based resin extruded expanded particles at a steam pressure of not more than 0.30 MPa.

Examples

An embodiment of the present invention will be described in more detail through Examples. Note that the present invention is not limited to Examples below.

(Test methods)

The test methods used to measure and evaluate various physical properties in Examples and Comparative Examples are as follows.

A reversion resin was used as a sample and the melt elongation and the MFR thereof were measured. The reversion resin had been obtained by reversion-to-resin of the extruded expanded particles obtained in each of Examples and Comparative Examples through the method below. The respective values obtained as a result of the measurement were used as the melt elongation and the MFR of the base resin.

(Reversion-to-resin)

The following (a1) to (a5) were carried out in sequence, so that reversion-to-resin was carried out: (a1) the extruded expanded particles obtained in each of Examples and Comparative Examples were put in a dryer having a temperature adjusted to 180°C; (a2) subsequently, the pressure inside the dryer was reduced to a pressure in a range of -0.05 MPa (gage pressure) to -0.10 MPa (gage pressure) over 5 to 10 minutes with use of a vacuum pump; (a3) thereafter, the extruded expanded particles were left to stand in the dryer for 30 minutes for preparation of a lump of resin (reversion resin); (a4) subsequently, the temperature in the dryer was reduced to room temperature, and the pressure in the dryer was then returned to normal pressure; and (a5) thereafter, the lump of resin was taken out of the dryer. The reversion resin obtained in the manner described above and without any change, or a resin obtained by cutting, as necessary, the reversion resin into smaller pieces with scissors was used as a sample for measuring various physical properties.

[Melt elongation in melt tension measurement]

The melt elongation of the base resin was determined by melt tension measurement at 230°C with the reversion resin being used as the sample. Used as a device for use in the melt tension measurement was a Capilograph (manufactured by TOYO SEIKI SEISAKU-SHO, LTD) which is equipped with an attachment for melt tension measurement, which is equipped, at a leading end thereof, with an orifice having a hole diameter ($\varphi$) of 1 mm and a length of 10 mm, and which includes a cylinder having a diameter ($\varphi$) of 10 mm. The method for measuring the melt elongation of the base resin with use of the device was as follows: (1) the cylinder, set at 230°C, of a Capilograph was filled with the sample (reversion resin); (2) the sample with which the cylinder was filled was left to stand in the cylinder for 5 minutes, and the sample was heated (preheated); (3) thereafter, a piston was lowered at a piston lowering speed of 10 mm/min so that the sample was discharged in the form of a strand through the orifice; (4) the sample discharged in the form of a strand was pulled over a pulley which had a load cell and which was installed 350 mm below the orifice, and taking up of the sample was started with a speed of 1 m/min; (5) after the taking up of the sample became stable, the take-up speed of the sample was increased at a constant rate such that the drawing speed was increased over 4 minutes from 1 m/min to reach 200 m/min; (6) the take-up speed was recorded at the moment at which the sample (reversion resin) in the form of a strand broke; (7) the same operations were repeated 4 more times (5 times in total), and the mean value of the take-up speeds for n=5 was determined as being the melt elongation of the base resin.

[MFR]

The MFR of the base resin was determined by measurement carried out: with use of the reversion resin as a sample; in compliance with the conditions of Procedure B described in ISO 1133 (1997); with use of Melt Indexer S-01 (manufactured by TOYO SEIKI SEISAKU-SHO, LTD); and under the conditions that were a temperature of 230°C and a load of 2.16 kg. The MFR of the base resin was determined as being the value obtained by conversion into the weight of the sample discharged through an orifice per 10 minutes on the basis of: a distance obtained by measurement of the travel distance of the piston of the Melt Indexer S-01 during a certain period of time; and the density of the sample (reversion resin) at the temperature of the measurement. Note that the certain period of time was 120 seconds in a case where the melt flow rate was more than 0.1 g/10 min and not more than 1.0 g/10 min, 60 seconds in a case where the melt flow rate was more than 1.0 g/10 min and not more than 3.5 g/10 min, or 30 seconds in a case where the melt flow rate was more than 3.5 g/10 min and not more than 30.0 g/10 min.

[Melting points $Tm_2$ and $Tm_3$ of polypropylene-based resins]

The melting points $Tm_2$ and $Tm_3$ of the branched polypropylene-based resin and the linear polypropylene-based resin were each determined by measurement in differential scanning calorimetry. As a differential scanning calorimeter, a differential scanning calorimeter of a DSC6200 type available from Seiko Instruments Inc. was used. The method for measuring the melting points $Tm_2$ and $Tm_3$ by differential scanning calorimetry was as follows: (1) the temperature of 5 mg to 6 mg of the sample (polypropylene-based resin) was increased from 40°C to 220°C at a temperature increase rate of 10°C/min so that the sample was melted; (2) thereafter, the temperature of the sample obtained was decreased from 220°C to 40°C at a temperature decrease rate of 10°C/min so that the sample was crystallized; and (3) thereafter, the temperature of the crystallized sample was further increased from 40°C to 220°C at a temperature increase rate of 10°C/min. A temperature corresponding to a peak (melting peak) of a DSC curve, obtained in the second temperature increase (i.e., in (3)), of the sample (polypropylene-based resin) was determined as being each of the melting points $Tm_2$ and $Tm_3$.

[Bulk density]

The bulk density of the polypropylene-based resin extruded expanded particles was calculated by carrying out the following (1) to (3) in sequence: (1) a measuring cup having an inner capacity Vk (L) which was precisely measured in advance and which was approximately 1 L was filled with the polypropylene-based resin extruded expanded particles to the brim; (2) the powder surface (the top surface) of the container was leveled, and the weight Wb (g) of the polypropylene-based resin extruded expanded particles inside the container was measured; and (3) the bulk density of the polypropylene-based resin extruded expanded particles was calculated from the following expression: Bulk density (g/L) = weight Wb (g) of expanded particles / volume Vk (L) of container.

[Open cell ratio]

The open cell ratio of the polypropylene-based resin extruded expanded particles was determined by measurement with use of an air-comparison pycnometer [Model 1000, available from Tokyo-Science Co., Ltd.] in accordance with a method described in PROCEDURE C of ASTM D2856-87. More specifically, the open cell ratio of the extruded expanded particles was calculated by carrying out the following (1) to (3) in sequence: (1) a volume Vc ($cm^3$) of the extruded expanded particles was measured with use of the air-comparison pycnometer; (2) subsequently, the whole extruded expanded particles whose Vc had been measured were submerged in ethanol contained in a graduated cylinder; (3) thereafter, an apparent volume Va ($cm^3$) of the extruded expanded particles was determined from the amount of increase in position of the ethanol in the graduated cylinder; and (4) the open cell ratio of the extruded expanded particles was calculated by the following expression:

$$\text{Open cell ratio (\%)} = ((Va\text{-}Vc) \times 100) / Va.$$

[Melting point $Tm_1$ of polypropylene-based resin extruded expanded particles]

The melting point $Tm_1$ of the polypropylene-based resin extruded expanded particles in the first temperature increase is a value determined by measurement in differential scanning calorimetry (hereinafter referred to as "DSC method"). As a differential scanning calorimeter, it is possible to use, for example, a differential scanning calorimeter of a DSC6200 type available from Seiko Instruments Inc.
The method for measuring the melting point $Tm_1$ of the polypropylene-based resin extruded expanded particles in the first temperature increase in differential scanning calorimetry was as follows: The temperature of the polypropylene-based resin extruded expanded particles was increased from 40°C to 220°C at a temperature increase rate of 10°C/min. Observation was made of a peak (melting peak) of a DSC curve, obtained in the temperature increase, of the polypropylene-based resin extruded expanded particles, and a temperature corresponding to the melting peak was determined as being the melting point $Tm_1$ of the polypropylene-based resin extruded expanded particles.

[Density of foamed molded product]

The weight Ws (g) of the obtained foamed molded product was measured. The length, width, and thickness of the foamed molded product were measured with use of a vernier caliper, and the volume Vs ($cm^3$) of the foamed molded product was calculated. The density (g/L) of the foamed molded product was calculated from the following expression:

$$\text{Density (g/L) of foamed molded product} = Ws / Vs \times 1,000.$$

(Minimum steam pressure and maximum steam pressure)

The minimum steam pressure and the maximum steam pressure of the polypropylene-based resin foamed molded product were measured by a method in which the following (1) to (5) were carried out.

(1) As to the polypropylene-based extruded expanded particles obtained in Examples and Comparative Examples, with use of a molding machine (KD345) manufactured by DAISEN Co., Ltd., a block-shaped mold (400 mm in length × 300 mm in width × variable thickness) was adjusted so as to have a thickness of 52 mm (gap-in-mold rate of 30%), and the mold was filled with the obtained polypropylene-based resin extruded expanded particles. The mold was then compressed so that the thickness thereof was 40 mm. Subsequently, the air inside the mold was expelled with use of steam at 0.1 MPa (gage pressure), and thereafter, heat-molding was carried out for 10 seconds with use of steam at 0.14 MPa (gage pressure), so that a polypropylene-based resin foamed molded product was obtained. Further, by a similar procedure except for changing the steam pressure in increments of 0.01 MPa, polypropylene-based resin foamed molded products were obtained with use of steam having respective steam pressures of up to 0.42 MPa. (2) With use of the polypropylene-based resin foamed molded product obtained that was cured in a curing chamber at 75°C for 24 hours and then left to stand at room temperature for 4 hours, the inner fusion ratio was measured. (3) Among the steam pressures at each of which a foamed molded product having an inner fusion ratio of not less than 60% was obtained, the lowest pressure was defined as the minimum steam pressure. (4) Similarly, the surfaces of each of the polypropylene-based resin foamed molded products obtained were checked by visual observation as to presence or absence of "melting", "shrinkage (wrinkles)", and a "sink" caused by melting of the base resin, and the surface properties of each of the foamed molded products were evaluated in accordance with the following criteria. (5) Among steam pressures at each of which a foamed molded product evaluated as having "good (acceptable)" surface properties was obtained, the highest pressure was defined as the maximum steam pressure.

(Criteria for evaluation of surface properties)

Good (acceptable): None of "melting", "shrinkage (wrinkles)", and a "sink" is observed on any of the surfaces of the foamed molded product.
Poor (unacceptable): At least one of "melting", "shrinkage (wrinkles)", and a "sink" is observed on any of the surfaces of the foamed molded product.

An inner fusion ratio is a value obtained by measurement according to a method involving the following (1) to (4): (1) With a cutter, a 5 mm deep cut is made perpendicularly on a given surface of the foamed molded product in a direction perpendicular to a part including the surface. (2) Then, the foamed molded product is torn along the cut by hand. (3) Out of the surface resulting from the tearing, a region other than the cut portion is visually checked to count the number of all expanded particles present in the region and the number of expanded particles broken at a portion of the region which portion is not a particle-to-particle interface (that is, expanded particles that are broken themselves). (4) The inner fusion ratio is calculated from the following expression:

$$\text{Rate of inner fusion (\%)} = \{(\text{the number of expanded particles broken at a portion of the region which portion is not a particle-to-particle interface}) / (\text{the number of all expanded particles present in the region})\} \times 100.$$

[Compressive strength of polypropylene-based resin foamed molded product]

Measurement of the compressive strength of the polypropylene-based resin foamed molded product was carried out in accordance with the following (1) and (2). (1) A test piece measuring 50 mm in length, 50 mm in width, and 25 mm in thickness was cut out from the polypropylene-based resin foamed molded product obtained in the above-described measurement of the minimum steam pressure and the maximum steam pressure, the polypropylene-based resin foamed molded product having been molded with use of steam having a minimum steam pressure of +0.02 MPa. (2) With use of the cut out test piece as a sample, the compressive stress (MPa) of the test piece at a time when the test piece was compressed by 50% at a rate of 10 mm/min was measured in compliance with NDZ-Z0504. The obtained value of compressive stress was regarded as compressive strength.

(Materials)

The following materials were used in Examples and Comparative Examples.

(Linear polypropylene-based resin)

· F227D; Random polypropylene (F227D) (melting point 139.8°C, MFR = 7) available from Prime Polymer Co., Ltd
· J-700GP; Homopolypropylene (J-700GP) (melting point 164.2°C, MFR = 7) available from Prime Polymer Co., Ltd
· F113G; Homopolypropylene (F113G) (melting point 161.5°C, MFR = 3) available from Prime Polymer Co., Ltd

(Conjugated diene etc.)

· IP; Isoprene (available from KURARAY CO., LTD.)

(Radical polymerization initiator)

PBI; t-Butylperoxy isopropyl carbonate (PERBUTYL I available from NOF CORPORATION)
PBZ; t-Butylperoxy benzoate (PERBUTYL Z available from NOF CORPORATION)

(Branched polypropylene-based resin)

· MPL-1; Resin modified at a blending ratio of F227D/PBI/IP = 100/1.4/0.5 (part by weight) (melting point 139.7°C, MFR = 2.1, melt elongation 5.9 m/min)
MPH-1; Resin modified at a blending ratio of J-700GP/PBI/IP = 100/1.4/0.7 (part by weight) (melting point 157.9°C, MFR = 2.7, melt elongation 6.1 m/min)
· MPH-2; Resin modified at a blending ratio of F113G/PBI/IP = 100/1.75/0.7 (part by weight) (melting point 155.8°C, MFR = 2.9, melt elongation 6.5 m/min) · MPH-3; Resin modified at a blending ratio of J-700GP/PBZ/IP = 100/0.25/0.5 (part by weight) (melting point 161.0°C, MFR = 0.4, melt elongation 3.9 m/min)
· MPB-1; Resin modified at a blending ratio of F227D/J-700GP/PBI/IP = 85/15/1.4/0.6 (part by weight) (MFR = 3.0, melt elongation 6.3 m/min) Note that MPB-1 is a resin containing the branched polypropylene-based resin (A) and the branched polypropylene-based resin (B).

The method for preparing each branched polypropylene-based resin will be described in the sections of Examples and Comparative Examples below.

(Example 1)

Supplied through a hopper at 70 kg/hour to a 45-mm φ twin screw extruder (L/D = 40) was a mixture of: 100 parts by weight of random polypropylene available from Prime Polymer Co., Ltd (F-227D, melting point $Tm_{3A}$ measured by the above method: 139.8°C) as the (a) linear polypropylene-based resin; and 1.4 parts by weight of t-butyl peroxy isopropylcarbonate (PERBUTYL I available from NOF CORPORATION) as the (c) radical polymerization initiator. While the mixture was melted and kneaded at a cylinder temperature of 200°C and at a rotational speed of 150 rpm, isoprene serving as a conjugated diene was supplied as the (b) monomer from an injection part provided in the middle part of the extruder, in a ratio of 0.5 parts by weight of the isoprene to 100 parts by weight of the (a) linear polypropylene-based resin, with use of a metering pump, and a resultant mixture was further melted and kneaded. Then, the mixture was extruded in the form of a strand through a die, cooled with water, and cut. Thus obtained were pellets of a branched polypropylene-based resin (A) (a first melting and kneading step for the polypropylene-based resin (A)).

Similarly, supplied through a hopper at 70 kg/hour to a 45-mm φ twin screw extruder (L/D = 40) was a mixture of: 100 parts by weight of homopolypropylene available from Prime Polymer Co., Ltd (J-700GP, melting point $Tm_{3B}$ measured by the above method: 164.2°C) as the (a) linear polypropylene-based resin; and 1.4 parts by weight of t-butyl peroxy isopropylcarbonate (PERBUTYL I available from NOF CORPORATION) as the (c) radical polymerization initiator. While the mixture was melted and kneaded at a cylinder temperature of 200°C and at a rotational speed of 150 rpm, isoprene serving as a conjugated diene, was supplied as the (b) monomer from an injection part provided in the middle part of the extruder, in a ratio of 0.7 parts by weight of the isoprene to 100 parts by weight of the (a) linear polypropylene-based resin, with use of a metering pump, and a resultant mixture was further melted and kneaded. Then, the mixture was extruded in the form of a strand through a die, cooled with water, and cut. Thus obtained were pellets of a branched polypropylene-based resin (B) (a first melting and kneading step for the polypropylene-based resin (B)).

Subsequently, supplied through a hopper at 1.0 kg/hour to a 15-mm φ twin screw extruder (L/D = 30) was a mixture of: 85 parts by weight of the branched polypropylene-based resin (A) and 15 parts by weight of the branched polypropylene-based resin (B). While the mixture was melted and kneaded at a cylinder temperature of 200°C and at a rotational speed of 100 rpm, carbon dioxide serving as a foaming agent was supplied from an injection part provided in the middle part of the extruder, in a ratio of 1.7 parts by weight of the carbon dioxide to 100 parts by weight of the polypropylene-based resin, with use of a metering pump, and a resultant mixture was further melted and kneaded (a second melting and kneading step).

Further, the melted and kneaded product was cooled by being caused to pass through a melt cooler connected to a leading end of the twin screw extruder and set at 155°C. Then, while the melted and kneaded product was being expanded by being extruded through a die, which was provided with two small holes with a diameter of 0.7 mm and attached to a leading end of the melt cooler, into an area under atmospheric pressure, the melted and kneaded product was cut with use of a rotating cutter attached to the leading end of the die. Thus obtained were polypropylene-based resin extruded expanded particles.

With use of the polypropylene-based resin extruded expanded particles obtained, the melt elongation and the MFR of the base resin were measured by the above-described methods. Further, the melting point $Tm_1$, the bulk density, and the open cell ratio of the obtained polypropylene-based resin extruded expanded particles were measured by the above-described methods. The results are shown in Table 1.

Further, with use of the obtained polypropylene-based resin extruded expanded particles, the minimum steam pressure, the maximum steam pressure, the density of a foamed molded product, and the compressive strength were measured by the above-described methods. The results are shown in Table 1.

(Example 7)

Supplied through a hopper at 70 kg/hour to a 45-mm φ twin screw extruder (L/D = 40) was a mixture of: 85 parts by weight of random polypropylene available from Prime Polymer Co., Ltd (F-227D, melting point $Tm_{3A}$ measured by the above method: 139.8°C) as the (a) linear polypropylene-based resin (A'); 15 parts by weight of homopolypropylene available from Prime Polymer Co., Ltd (J-700GP, melting point $Tm_{3B}$ measured by the above method: 164.2°C) as the linear polypropylene-based resin (B'); and 1.4 parts by weight of t-butyl peroxy isopropylcarbonate (PERBUTYL I available from NOF CORPORATION) as the (c) radical polymerization initiator. While the mixture was melted and kneaded at a cylinder temperature of 200°C and at a rotational speed of 150 rpm, isoprene serving as a conjugated diene was supplied as the (b) monomer from an injection part provided in the middle part of the extruder, in a ratio of 0.6 parts by weight of the isoprene to 100 parts by weight of a total of the (a) linear polypropylene-based resins (A') and (B'), with use of a metering pump, and a resultant mixture was further melted and kneaded. Then, the mixture was extruded in the form of a strand through a die, cooled with water, and cut. Thus obtained were pellets of a branched polypropylene-based resin containing, within a single molecule (a single polymer), the polypropylene-based resin (A) and the polypropylene-based resin (B) which were in a state of being crosslinked with each other (a first melting and kneading step).

Subsequently, the obtained branched polypropylene-based resin was supplied through a hopper at 1.0 kg/hour to a 15-mm φ twin screw extruder (L/D = 30). While the branched polypropylene-based resin was melted and kneaded at a cylinder temperature of 200°C and at a rotational speed of 100 rpm, carbon dioxide serving as a foaming agent was supplied from an injection part provided in the middle part of the extruder, in a ratio of 1.7 parts by weight of the carbon dioxide to 100 parts by weight of the polypropylene-based resin, with use of a metering pump, and a resultant mixture was further melted and kneaded (a second melting and kneading step).

Further, the melted and kneaded product was cooled by being caused to pass through a melt cooler connected to a leading end of the twin screw extruder and set at 155°C. Then, while the melted and kneaded product was being expanded by being extruded through a die, which was provided with two small holes with a diameter of 0.7 mm and attached to a leading end of the melt cooler, into an area under atmospheric pressure, the melted and kneaded product was cut with use of a rotating cutter attached to the front end of the die. Thus obtained were polypropylene-based resin extruded expanded particles.

With use of the polypropylene-based resin extruded expanded particles obtained, the melt elongation and the MFR of the base resin were measured by the above-described methods. Further, melting points of and a weight ratio between the branched polypropylene-based resin (A) and the branched polypropylene-based resin (B) in the base resin were measured as follows. The base resin was separated according to melting point to obtain am elution chromatogram as described above. Subsequently, a component corresponding to the highest peak in the obtained elution chromatogram was defined as the branched polypropylene-based resin (A), and a component corresponding to the second highest peak in the elution chromatogram was defined as the branched polypropylene-based resin (B). The respective melting points $Tm_{2A}$ and $Tm_{2b}$ of the branched polypropylene-based resin (A) and the branched polypropylene-based resin (B) thus obtained were measured by the above method. Further, from a peak area ratio in the elution chromatogram of MPB-1, a weight ratio between the branched polypropylene-based resin (A) and the branched polypropylene-based resin (B) contained in MPB-1 was calculated.

As a result, the melting point $Tm_{2A}$ of the branched polypropylene-based resin (A) was 140.1°C, the melting point $Tm_{2B}$ of the branched polypropylene-based resin (B) was 156.2°C, and the weight ratio between the resin (A) and the resin (B) was A/B = 86/14.

Further, the melting point $Tm_1$, the bulk density, and the open cell ratio of the obtained polypropylene-based resin extruded expanded particles were measured. The results are shown in Table 2.

Further, with use of the obtained polypropylene-based resin extruded expanded particles, the minimum steam pressure, the maximum steam pressure, the density of a foamed molded product, and the compressive strength were measured by the above-described methods. The results are shown in Table 2.

(Example 2 to 6 and Comparative Examples 1 to 3)

Pellets of a branched polypropylene-based resin were obtained as in Example 1, except that changes as described in (Branched polypropylene-based resin) were made from

Example 1.

Subsequently, polypropylene-based resin extruded expanded particles were obtained as in Example 1, except that the mixing ratio of the branched polypropylene-based resin used in Example 1 was changed to a mixing ratio of a branched polypropylene-based resin indicated in Tables 1 and 2.

With use of the polypropylene-based resin extruded expanded particles obtained, the melt elongation and the MFR of the base resin were measured by the above-described methods, as in Example 1. Further, the melting point $Tm_1$, the bulk density, and the open cell ratio of the obtained polypropylene-based resin extruded expanded particles were measured by the above-described methods, as in Example 1. The results are shown in Tables 1 and 2.

Further, a polypropylene-based resin foamed molded product was obtained as in Example 1. As in Example 1, the polypropylene-based resin foamed molded product was cured and left to stand at room temperature, and then the minimum steam pressure, the maximum steam pressure, the density, and the compressive strength of the polypropylene-based resin foamed molded product were measured. The results are shown in Tables 1 and 2.

[Table 1]

(Table 1)

| | | | Example 1 | Example 2 | Example 3 | Example 4 | Example 5 |
|---|---|---|---|---|---|---|---|
| Resin (A) | MPL-1 | Part by weight | 85 | 95 | 80 | 85 | 80 |
| Resin (B) | MPH-1 | Part by weight | is | 5 | 20 | | |
| | MPH-2 | Part by weight | | | | 15 | 20 |
| | MPH-3 | Part by weight | | | | | |

(continued)

| | | | Example 1 | Example 2 | Example 3 | Example 4 | Example 5 |
|---|---|---|---|---|---|---|---|
| Resin (A) + Resin (B) | MPB-1 | Part by weight | | | | | |
| Physical properties of base resin | Melt elongation | m/min | 7.4 | 7.2 | 7.8 | 7.1 | 7.3 |
| | MFR | g/10 min | 3.8 | 3.4 | 4.2 | 3.9 | 4.3 |
| Physical properties of extruded expanded particles | Melting point in first temperature increase | °C | 142.5 | 139.2 | 152.0 | 141.3 | 145.3 |
| | Bulk density | g/L | 68 | 66 | 69 | 67 | 69 |
| | Open cell ratio | % | 1.2 | 1.0 | 1.3 | 1.1 | 1.2 |
| Physical properties of foamed molded product | Minimum steam pressure | MPa | 0.18 | 0.16 | 0.24 | 0.18 | 0.20 |
| | Maximum steam pressure | MPa | 0.30 | 0.24 | 0.30 | 0.28 | 0.30 |
| | Density of molded product | g/L | 83 | 80 | 82 | 81 | 83 |
| | Compressive strength | MPa | 0.35 | 0.34 | 0.36 | 0.34 | 0.35 |

[Table 2]

(Table 2)

| | | | Example 6 | Example 7 | Comparative Example 1 | Comparative Example 2 | Comparative Example 3 |
|---|---|---|---|---|---|---|---|
| Resin (A) | MPL-1 | Part by weight | 75 | | 100 | 60 | 80 |
| Resin (B) | MPH-1 | Part by weight | | | | 40 | |
| | MPH-2 | Part by weight | 25 | | | | |
| | MPH-3 | Part by weight | | | | | 20 |
| Resin (A) + Resin (B) | MPB-1 | Part by weight | | 100 | | | |
| Physical properties of base resin | Melt elongation | m/min | 7.2 | 7.0 | 6.9 | 8.1 | 8.7 |
| | MFR | g/10 min | 4.4 | 3.7 | 2.9 | 4.5 | 4.7 |

(continued)

| | | | Example 6 | Example 7 | Comparative Example 1 | Comparative Example 2 | Comparative Example 3 |
|---|---|---|---|---|---|---|---|
| Physical properties of extruded expanded particles | Melting point in first temperature increase | °C | 149.7 | 141.5 | 138.6 | 156.8 | 159.0 |
| | Bulk density | g/L | 68 | 68 | 65 | 70 | 64 |
| | Open cell ratio | % | 1.4 | 1.1 | 0.7 | 2.1 | 2.1 |
| Physical properties of foamed molded product | Minimum steam pressure | MPa | 0.22 | 0.18 | 0.16 | 0.30 | 0.32 |
| | Maximum steam pressure | MPa | 0.32 | 0.28 | 0.24 | 0.38 | 0.40 |
| | Density of molded product | g/L | 82 | 82 | 82 | 81 | 84 |
| | Compressive strength | MPa | 0.36 | 0.35 | 0.32 | 0.40 | 0.48 |

As indicated in Tables 1 and 2, the extruded expanded particles in accordance with an embodiment of the present invention had excellent low pressure moldability. Further, a foamed molded product obtained from the extruded expanded particles in accordance with an embodiment of the present invention had excellent compressive strength. In contrast, as indicated in Comparative Examples 1 to 3, (i) extruded expanded particles outside the scope of the present invention had inferior low pressure moldability or (ii) a foamed molded product obtained from the extruded expanded particles outside the scope of the present invention had inferior compressive strength.

Industrial Applicability

An embodiment of the present invention advantageously makes it possible to provide polypropylene-based resin extruded expanded particles that have excellent low pressure moldability and are capable of providing a polypropylene-based resin foamed molded product having excellent compressive strength. Therefore, an embodiment of the present invention can be suitably used in the fields of, for example, automotive interior materials, shock-absorbing materials, packaging materials, and heat insulating materials.

**Claims**

1.   Polypropylene-based resin extruded expanded particles, comprising

a base resin containing (i) more than 70% by weight and not more than 98% by weight of a polypropylene-based resin (A) having a branched structure and a melting point $Tm_{2A}$ of not lower than 130.0°C and lower than 143.0°C and (ii) not less than 2% by weight and less than 30% by weight of a polypropylene-based resin (B) having a branched structure and a melting point $Tm_{2B}$ of not lower than 150.0°C and lower than 170.0°C, a total amount of the polypropylene-based resin (A) and the polypropylene-based resin (B) being 100% by weight, wherein a melting point $Tm_1$ of the polypropylene-based resin extruded expanded particles in a first temperature increase is not lower than 130.0°C and lower than 155.0°C.

2.   The polypropylene-based resin extruded expanded particles according to claim 1, wherein the base resin contains the polypropylene-based resin (A) in an amount of more than 80% by weight and not more than 98% by weight and the polypropylene-based resin (B) in an amount of not less than 2% by weight and less than 20% by weight, a total amount of the polypropylene-based resin (A) and the polypropylene-based resin (B) being 100% by weight.

3. The polypropylene-based resin extruded expanded particles according to claim 1 or 2, wherein the base resin has a melt elongation of 3.0 m/min to 30.0 m/min.

4. The polypropylene-based resin extruded expanded particles according to any one of claims 1 to 3, wherein the base resin has a melt flow rate of 1.0 g/10 min to 20.0 g/10 min.

5. The polypropylene-based resin extruded expanded particles according to any one of claims 1 to 4, wherein the polypropylene-based resin extruded expanded particles have a bulk density of 30 g/L to 600 g/L.

6. The polypropylene-based resin extruded expanded particles according to any one of claims 1 to 5, wherein the polypropylene-based resin extruded expanded particles have an open cell ratio of not more than 10.0%.

7. A polypropylene-based resin foamed molded product obtained by molding polypropylene-based resin extruded expanded particles according to any one of claims 1 to 6.

8. A method for producing polypropylene-based resin extruded expanded particles according to any one of claims 1 to 6, the method comprising:

a preparation step of preparing the polypropylene-based resin (A) having a branched structure and the polypropylene-based resin (B) having a branched structure; and
an extrusion-expansion step of preparing the polypropylene-based resin extruded expanded particles,
the preparation step including a first melting and kneading step of melting and kneading a first mixture that contains (a) a linear polypropylene-based resin, (b) at least one type of monomer selected from the group consisting of a conjugated diene and a vinyl aromatic compound, and (c) a radical polymerization initiator,
the first melting and kneading step including preparing the polypropylene-based resin (A) and the polypropylene-based resin (B) separately,
the extrusion-expansion step including a second melting and kneading step of melting and kneading a composition that contains a second mixture and a blowing agent, the second mixture containing the polypropylene-based resin (A) and the polypropylene-based resin (B).

9. A method for producing polypropylene-based resin extruded expanded particles according to any one of claims 1 to 6, the method comprising:

a preparation step of preparing the polypropylene-based resin (A) having a branched structure and the polypropylene-based resin (B) having a branched structure; and
an extrusion-expansion step of preparing the polypropylene-based resin extruded expanded particles,
the preparation step including a first melting and kneading step of melting and kneading a first mixture that contains (a) a linear polypropylene-based resin, (b) at least one type of monomer selected from the group consisting of a conjugated diene and a vinyl aromatic compound, and (c) a radical polymerization initiator,
the first melting and kneading step including preparing a polypropylene-based resin having a branched structure, with use of, as (a) the linear polypropylene-based resin, a mixture of (a-1) a linear polypropylene-based resin (A') having a melting point $Tm_{3A}$ of not lower than 130.0°C and lower than 150.0°C and (a-2) a linear polypropylene-based resin (B') having a melting point $Tm_{3B}$ of not lower than 150.0°C and lower than 170.0°C, the polypropylene-based resin having the branched structure containing, within a single molecule, the polypropylene-based resin (A) and the polypropylene-based resin (B) which are in a state of being crosslinked with each other,
the extrusion-expansion step including a second melting and kneading step of melting and kneading a composition that contains a second mixture and a blowing agent, the second mixture containing the polypropylene-based resin having a branched structure.

10. The method according to claim 8 or 9, wherein the at least one type of monomer selected from the group consisting of a conjugated diene and a vinyl aromatic compound in the first melting and kneading step is isoprene and/or butadiene.

11. The method according to any one of claims 8 to 10, wherein the at least one type of monomer selected from the group consisting of a conjugated diene and a vinyl aromatic compound is used in the first melting and kneading step in an amount of 0.01 parts by weight to 5.00 parts by weight relative to 100 parts by weight of the linear polypropylene-based resin.

12. The method according to any one of claims 8 to 11, wherein the radical polymerization initiator in the first melting and kneading step is at least one selected from the group consisting of t-butylperoxy isopropyl carbonate and t-butyl peroxy benzoate.

13. The method according to any one of claims 8 to 12, wherein a ratio of the following (i) to the following (ii) is 0.05 to 5.00: (i) an amount, in parts by weight, in which the at least one type of monomer selected from the group consisting of a conjugated diene and a vinyl aromatic compound is used; and (ii) an amount, in parts by weight, in which the radical polymerization initiator is used.

14. A method for producing a polypropylene-based resin foamed molded product, comprising a molding step of molding polypropylene-based resin extruded expanded particles produced by a method recited in any one of claims 8 to 13.

15. The method according to claim 14, wherein the molding step includes heating the polypropylene-based resin extruded expanded particles at a steam pressure of not more than 0.30 MPa.

## INTERNATIONAL SEARCH REPORT

| International application No. |
|---|
| **PCT/JP2022/014285** |

**A. CLASSIFICATION OF SUBJECT MATTER**

*C08J 9/16*(2006.01)i
FI: C08J9/16 CES

According to International Patent Classification (IPC) or to both national classification and IPC

**B. FIELDS SEARCHED**

Minimum documentation searched (classification system followed by classification symbols)

C08J9/00-9/42; B29C44/00-44/60; B29C67/20

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2009-256460 A (KANEKA CORP.) 05 November 2009 (2009-11-05)<br>claims 1, 3, paragraphs [0015], [0016], examples | 1-15 |
| Y | WO 2016/147919 A1 (KANEKA CORP.) 22 September 2016 (2016-09-22)<br>paragraph [0107] | 1-15 |
| A | WO 2018/016399 A1 (KANEKA CORP.) 25 January 2018 (2018-01-25)<br>entire text, all drawings | 1-15 |
| A | WO 2020/004429 A1 (KANEKA CORP.) 02 January 2020 (2020-01-02)<br>entire text, all drawings | 1-15 |

☐ Further documents are listed in the continuation of Box C.   ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **19 May 2022** | **31 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/014285**

| Patent document cited in search report | | | Publication date (day/month/year) | Patent family member(s) | | | Publication date (day/month/year) |
|---|---|---|---|---|---|---|---|
| JP | 2009-256460 | A | 05 November 2009 | (Family: none) | | | |
| WO | 2016/147919 | A1 | 22 September 2016 | US | 2017/0369669 | A1 | |
| | | | | paragraph [0186] | | | |
| | | | | EP | 3269761 | A1 | |
| | | | | CN | 107428982 | A | |
| WO | 2018/016399 | A1 | 25 January 2018 | US | 2019/0153188 | A1 | |
| | | | | entire text, all drawings | | | |
| | | | | EP | 3489287 | A1 | |
| | | | | CN | 109476868 | A | |
| WO | 2020/004429 | A1 | 02 January 2020 | US | 2021/0108016 | A1 | |
| | | | | entire text, all drawings | | | |
| | | | | EP | 3816209 | A1 | |
| | | | | CN | 112368322 | A | |

Form PCT/ISA/210 (patent family annex) (January 2015)

**EP 4 317 274 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9302131 A
- JP 2009256460 A
- JP 2018016399 A
- JP 2009144096 A
- JP 2002542360 W
- JP 2014055924 A
- JP 10237212 A
- JP 51022951 A
- JP 53033996 A

36